# EUROPEAN PATENT APPLICATION

(11) **EP 4 842 009 A1**
(43) Date of publication of application: **18.11.2026**
(21) Application number: 24924488.0
(22) Date of filing: 28.10.2024
(51) Int. Cl.: H04Q 11/00

(54) **PROTECTION SWITCHING METHOD AND APPARATUS FOR OPTICAL TRANSPORT NETWORK**

(30) Priority: 18.02.2024 CN 202410182700
(71) Applicant: Huawei Technologies Co., Ltd., Shenzhen, Guangdong 518129 (CN)
(72) Inventor: ZHENG, Shuqian, Shenzhen, Guangdong 518129 (CN); WANG, Xingxin, Shenzhen, Guangdong 518129 (CN); HUANG, Ding, Shenzhen, Guangdong 518129 (CN)
(74) Representative: Maiwald GmbH
(86) International application number: PCT/CN2024/127920
(87) International publication number: WO 2025/171726

(57) **Abstract**

A protection switching method and apparatus for an optical transport network are provided, relating to the field of optical communication technologies, to improve switching performance. In this application, before completing a re-framing operation, a first network device transparently transmits, to an egress end, a data frame stream received through a second transmission path, and then the egress end transparently transmits the data frame stream to a downstream network device. Transparent transmission means not changing an alignment identifier in the received data frame stream. After receiving the transparently transmitted data frame stream, each downstream node can start re-framing without waiting for upstream nodes to complete re-framing. When transmission delay is ignored, it may be understood that downstream nodes at all hops almost simultaneously start a re-framing operation. In this way, the re-framing duration does not increase with hop count, thereby improving switching performance.

## Description

### CROSS-REFERENCE TO RELATED APPLICATIONS

This application claims priority to Chinese Patent Application No. 202410182700.0, filed with the China National Intellectual Property Administration on February 18, 2024 and entitled "PROTECTION SWITCHING METHOD AND APPARATUS FOR OPTICAL TRANSPORT NETWORK", which is incorporated herein by reference in its entirety.

### TECHNICAL FIELD

This application relates to the field of optical communication technologies, and in particular, to a protection switching method and apparatus for an optical transport network.

### BACKGROUND

A fine grain optical transport network (fine grain optical transport network, fgOTN) is a major technological innovation based on hard-pipe technology within an OTN framework, representing the next-generation evolution of OTN. The fgOTN is mainly used to carry premium small-granularity services below 1G, and can be widely used in government and enterprise networks, as well as dedicated networking in industries such as electric power and health care. In scenarios requiring high-quality access to computing power networks for enterprise production systems and, or for new services such as extended reality (extended reality, XR) in future smart homes, the fgOTN will play an increasingly important role.

In terms of protection, the fgOTN also supports SNCP segment protection to achieve high reliability protection against a plurality of fiber cuts in optical networks. However, in cascaded or segment protection scenarios, after a node performs protection switching due to a fault, all downstream nodes must perform a re-framing operation. During re-framing, invalid data frames (payload area filled with invalid data) are generated. The framing identifier (indicating a frame start position) for these invalid data frames is determined based on the frame header position before protection switching. Therefore, each node must wait until its upstream node completes re-framing before starting its own re-framing. As a result, the re-framing duration increases with hop count, thereby degrading switching performance.

### SUMMARY

Embodiments of this application provide a protection switching method and apparatus for an optical transport network to improve switching performance.

According to a first aspect, an embodiment of this application provides a protection switching method for an optical transport network, including: A first network device detects, at an ingress end, that a fault occurs on a first transmission path, where the ingress end is configured to connect the first network device and an upstream network device of the first network device.

The first network device switches, at the ingress end, to receive a data frame stream from the upstream network device through a second transmission path. The first network device performs, at the ingress end, a re-framing operation on the data frame stream. Before completing the re-framing operation at the ingress end, the first network device transparently transmits the data frame stream to a downstream network device of the first network device at an egress end, where the egress end is configured to connect the first network device and the downstream network device.

In the foregoing solution of this application, before completing the re-framing operation, the first network device transparently transmits, to the egress end, the data frame stream received through the second transmission path, and then the egress end transparently transmits the data frame stream to the downstream network device. Transparent transmission mean not changing an alignment identifier in the received data frame stream. In the conventional technology, a framing identifier is added according to a framing rule before protection switching in a re-framing process. After receiving a data frame of this type, a downstream node may perform framing, and does not start re-framing. Therefore, each downstream node needs to wait until its upstream node completes re-framing, and then starts its own re-framing only after sending the data frame stream by using a new frame header. However, in this embodiment of this application, after receiving the transparently transmitted data frame stream, each downstream node can start re-framing without waiting for upstream nodes to complete re-framing. When transmission delay is ignored, it may be understood that downstream nodes at all hops almost simultaneously start a re-framing operation. In this way, the re-framing duration does not increase with hop count, thereby improving switching performance.

In a possible design, that the first network device detects, at the ingress end, that a fault occurs on the first transmission path includes: The first network device detects, at the ingress end, that a loss of frame LOF alarm occurs on the first transmission path.

In a possible design, the first network device switches, at the ingress end, to receive the data frame stream from the upstream network device through the second transmission path, and the method further includes: When detecting, at the ingress end, that the LOF alarm is generated on the first transmission path, the first network device inserts, at the egress end, an alarm indication signal AIS maintenance frame, where an overhead area of the AIS maintenance frame includes a framing identifier, and an insertion position of the framing identifier is determined based on a frame header position of the data frame stream before the fault occurs on the first transmission path; and the first network device sends, at the egress end, the AIS maintenance frame to the downstream network device.

In the foregoing design, when the AIS maintenance frame is inserted, the framing identifier is inserted based on the frame header position of the data frame on the transmission path before protection switching, and a frame header position of the data frame stream after protection switching may be offset relative to the frame header position of the data frame on the transmission path before switching. This affects triggering of a framing operation by a downstream node. Therefore, in this application, a transparent transmission solution is used, so that the downstream node can trigger a re-framing operation in a timely manner, to improve switching performance.

In a possible design, the method further includes: When detecting, at the ingress end, that the LOF alarm is generated on the first transmission path, the first network device updates, to an alarm indication state, a state of a pipe to which the data frame stream belongs, where the alarm indication state indicates that a fault exists in an upstream direction of the first network device; and transparently transmitting, at the egress end, the data frame stream to the downstream network device includes: before the alarm indication state is terminated, transparently transmitting, at the egress end, the data frame stream to the downstream network device, where a duration of the alarm indication state is greater than or equal to a duration of performing the re-framing operation.

In some examples, the duration of the alarm indication state may be configured to be greater than or equal to the duration of performing the re-framing operation. Therefore, before the alarm indication state is terminated, the data frame stream may be transparently transmitted at the egress end to the downstream network device. In some other examples, a termination moment of the alarm indication state is later than a completion moment of protection switching. In some implementation scenarios, the alarm indication state may be terminated after the re-framing operation is completed. In a possible example, a termination moment of the alarm indication state is later than or equal to a completion moment of the re-framing operation.

In the foregoing solution of this application, the alarm indication state is modified, and before the alarm indication state is terminated, transparent transmission of the data frame stream (valid data frames) is triggered. That is, service data is carried.

In a possible design, a subnetwork connection protection with sublayer monitoring SNCS group is configured between the first network device and the downstream network device of the first network device, an overhead area of the AIS maintenance frame further includes a path monitoring PM overhead and a tandem connection monitoring TCM overhead, and the PM overhead indicates that a fault exists on the first network device. Before the first network device sends, at the egress end, the AIS maintenance frame to the downstream network device, the method further includes: The first network device modifies, at the egress end, the TCM overhead of the AIS maintenance frame, where the modified TCM overhead of the AIS maintenance frame indicates that the fault does not continue to a downstream direction of the first network device, and indicates that the downstream network device is to perform non-intrusive monitoring on the PM overhead, and that the downstream network device is prohibited from performing SNCS switching when it is detected that the PM overhead indicates that a fault exists on the first network device.

In the foregoing solution, in a scenario of a cascaded SNCS group, even if the downstream network device detects that the TCM overhead does not indicate a fault, the downstream network device still needs to perform PM layer non-intrusive monitoring, to suppress frame header regeneration, and transparently transmit the data frame stream. However, when it is detected that the PM overhead indicates that a fault exists on the first network device, SNCS switching is also prohibited.

In a possible design, a data frame in the data frame stream is a fine grain optical transport network fgOTN frame.

According to a second aspect, an embodiment of this application provides a protection switching method for an optical transport network, including: A second network device receives, at an ingress end, an AIS maintenance frame from an upstream network device of the second network device, and sends the AIS maintenance frame to a downstream network device through an egress end, where the ingress end is configured to connect the second network device and the upstream network device, and the egress end is configured to connect the second network device and the downstream network device; after a specified duration elapses from reception of the AIS maintenance frame, the second network device receives, at the ingress end, a data frame stream from the upstream network device; and the second network device performs, at the ingress end, a re-framing operation on the data frame stream, and before completing the re-framing operation, transparently transmits, at the egress end, the data frame stream to the downstream network device of the second network device.

In this embodiment of this application, after receiving the transparently transmitted data frame stream, each downstream node can start re-framing without waiting for upstream nodes to complete re-framing. When transmission delay is ignored, it may be understood that downstream nodes at all hops almost simultaneously start a re-framing operation. In this way, the re-framing duration does not increase with hop count, thereby improving switching performance.

In a possible design, the method further includes:
when receiving the AIS maintenance frame, the second network device updates, to an alarm indication state, a state of a pipe to which the data frame stream belongs, where the alarm indication state indicates that a fault exists in an upstream direction of the second network device; and
transparently transmitting, at the egress end, the data frame stream to the downstream network device includes:
   before the alarm indication state is terminated, transparently transmitting, at the egress end, the data frame stream to the downstream network device, where
   a duration of the alarm indication state is greater than or equal to a duration of performing the re-framing operation.

In a possible design, no subnetwork connection protection SNCP group is configured between the second network device and the upstream network device of the second network device.

In a possible design, a subnetwork connection protection with sublayer monitoring SNCS group is configured between the second network device and the upstream network device of the second network device, and an overhead area of the AIS maintenance frame further includes a path monitoring PM overhead and a tandem connection monitoring TCM overhead. The PM overhead indicates that a fault exists in the upstream direction of the second network device, and the TCM overhead indicates that the fault does not continue to the second network device, to indicate the network device not to perform protection switching. After the second network device receives the AIS maintenance frame, and before the second network device transparently transmits, at the egress end, the data frame stream to the downstream network device, the method further includes: performing non-intrusive monitoring on the AIS maintenance frame, and determining that the PM overhead indicates that the fault exists in the upstream direction of the second network device.

In a possible design, a data frame in the data frame stream is a fine grain optical transport network fgOTN frame.

According to a third aspect, an embodiment of this application provides a protection switching apparatus for an optical transport network. The protection switching apparatus for the optical transport network is used in a network device, for example, a first network device or a second network device. The apparatus includes a processor and a memory. The memory is configured to store program code. The processor is configured to read and execute the program code stored in the memory, to implement the method according to any one of the first aspect or the designs of the first aspect, or implement the method according to any one of the second aspect or the designs of the second aspect.

According to a fourth aspect, an embodiment of this application provides a protection switching apparatus for an optical transport network. The protection switching apparatus for the optical transport network is used in a network device, for example, a first network device or a second network device. The apparatus includes a processor and an optical transceiver. The processor is configured to perform the method according to any one of the first aspect or the designs of the first aspect, or perform the method according to any one of the second aspect or the designs of the second aspect, and transmit and receive a data frame stream and/or an AIS maintenance frame through the optical transceiver.

According to a fifth aspect, an embodiment of this application further provides a computer-readable storage medium. The storage medium stores a software program, and when the software program is read and executed by one or more processors, the method in any design of the first aspect or the second aspect may be implemented.

According to a sixth aspect, an embodiment of this application provides a computer program product including instructions. When the computer program product runs on a computer, the computer performs the method provided in any design of the first aspect or the second aspect.

According to a seventh aspect, an embodiment of this application provides a chip. The chip is connected to a memory, and is configured to read and execute a software program stored in the memory, to implement the method provided in any design of the first aspect or the second aspect.

In this application, based on the implementations provided in the foregoing aspects, the implementations may be further combined to provide more implementations.

### BRIEF DESCRIPTION OF DRAWINGS

FIG. 1 is a diagram of an OTN network architecture;
FIG. 2 is a diagram of a structure of an OTN device;
FIG. 3A is a diagram of a structure of an OTN frame;
FIG. 3B is a diagram of a structure of an fgODUflex frame;
FIG. 4A is a diagram of a non-cascaded segment protection scenario;
FIG. 4B is a diagram of a protection switching procedure in a non-cascaded segment protection scenario;
FIG. 5A is a diagram of a cascaded segment protection scenario;
FIG. 5B is a diagram of a protection switching procedure in a cascaded segment protection scenario;
FIG. 6 is a schematic flowchart of a protection switching method for an optical network according to an embodiment of this application;
FIG. 7 is a schematic flowchart of a protection switching method for an optical network according to an embodiment of this application;
FIG. 8 is a schematic flowchart of another protection switching method for an optical network according to an embodiment of this application;
FIG. 9A is a schematic flowchart of a protection switching method for an optical transport network according to an embodiment of this application;
FIG. 9B(1) and FIG. 9B(2) are a schematic flowchart of protection switching for an optical transport network according to an embodiment of this application;
FIG. 10A is a schematic flowchart of a protection switching method for an optical transport network according to an embodiment of this application;
FIG. 10B(1) and FIG. 10B(2) are a schematic flowchart of protection switching for an optical transport network according to an embodiment of this application;
FIG. 11 is a diagram of a structure of a possible protection switching apparatus for an optical transport network according to an embodiment of this application;
FIG. 12 is a diagram of a structure of another possible protection switching apparatus for an optical transport network according to an embodiment of this application; and
FIG. 13 is a diagram of a structure of still another possible protection switching apparatus for an optical transport network according to an embodiment of this application.

### DESCRIPTION OF EMBODIMENTS

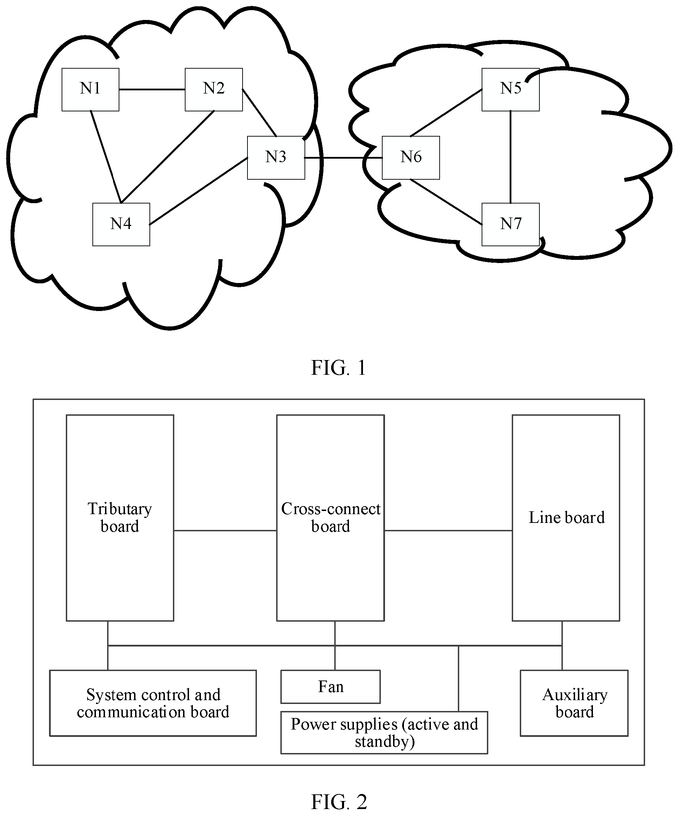

Embodiments of this application are applicable to an optical network such as an OTN. An OTN is usually formed by connecting a plurality of OTN devices through optical fibers, and may have different topology types such as a line type, a ring type, and a mesh type based on a specific requirement. An OTN shown in FIG. 1 includes two OTN networks. Each OTN network includes a specific quantity of OTN devices (N1 to N7). Based on an actual requirement, one OTN device may have different functions. Generally, OTN devices are classified into an optical-layer device, an electrical-layer device, and an opto-electronic hybrid device. The optical-layer device is a device that can process an optical-layer signal, for example, an optical amplifier (optical amplifier, OA). The electrical-layer device is a device that can process an electrical-layer signal, for example, a device that can process an OTN signal. The opto-electronic hybrid device is a device that has a capability of processing an optical-layer signal and an electrical-layer signal. It should be noted that, based on a specific integration requirement, a plurality of different functions may be integrated into one OTN device. The technical solutions provided in this application are applicable to OTN devices of different forms and integrations. A network device in embodiments of this application may be an OTN device, and the network device may also be referred to as a network node, or may be referred to as a node for short.

FIG. 2 is a diagram of a structure of a possible OTN device. The OTN device herein may be the OTN nodes (N1 to N7) in FIG. 1. Specifically, an OTN device includes a power supply, a fan, and an auxiliary board, and may further include a tributary board, a line board, a cross-connect board, an optical-layer processing board, and a system control and communication board. The power supply is configured to supply power to the OTN device, and may include an active power supply and a standby power supply. The fan is configured to dissipate heat of the device. The auxiliary board is configured to provide an auxiliary function, for example, provide an external alarm or access an external clock. The tributary board, the cross-connect board, and the line board are mainly configured to process an electrical-layer signal of an OTN. The tributary board is configured to implement receiving and sending of various client services, for example, an SDH service, a packet service, an Ethernet service, and a forward service. Further, the tributary board may be divided into a client-side optical module and a signal processor. The client-side optical module may be an optical transceiver, configured to receive and/or send service data. The signal processor is configured to map service data to a data frame and demap the service data from the data frame. The cross-connect board is configured to exchange a data frame, and complete exchange of one or more types of data frames. The line board mainly processes a line-side data frame. Specifically, the line board may be divided into a line-side optical module and a signal processor. The line-side optical module may be a line-side optical transceiver, configured to receive and/or send a data frame. The signal processor is configured to multiplex and demultiplex a line-side data frame, or map and demap a line-side data frame. The system control and communication board is configured to implement system control and communication. Specifically, information may be collected from the different boards by using a backplane, or a control instruction is sent to a corresponding board. It should be noted that, unless otherwise specified, there may be one or more specific components (for example, signal processors). This is not limited in this application. It should be further noted that, a type of a board included in the device, a specific function design of the board, and a quantity of boards are not limited in this embodiment of this application.

It should be noted that types and quantities of boards specifically included in each device may be different. For example, a network device serving as a core node may not have a tributary board. A network device serving as an edge node may have a plurality of tributary boards.

Technical concepts in embodiments of this application are first described below.
(1) Loss of frame (loss of frame, LOF) alarm. The LOF alarm indicates a loss of frame on a line receiving side. Generally, when errors are detected in received A1 and A2 bytes, the LOF alarm is detected. The A1 and A2 bytes are frame synchronization bytes.
(2) Out of frame (Out Of Frame, OOF) alarm. A state in which a frame of a receiving device is not maintained in exact phase alignment with a frame of a received signal is referred to as an out-of-frame state. That is, if frame headers cannot be determined for several consecutive frames (for example, five frames) (different frames cannot be distinguished), a receiving end enters the out-of-frame state and generates the out-of-frame alarm.
(3) A data frame may be an OTN frame or a flexible Ethernet (Flex Ethernet, FlexE) frame, and is used to carry various types of service data, to implement management and monitoring of the service data. The OTN frame may be a fine grain fgOTN frame. The OTN frame may alternatively be an optical data unit-k (optical data unit-k, ODUk), an ODUCn, an ODUflex, an optical transport unit (optical transport unit, OTU)-k, an OTUCn, an optical payload unit (optical payload unit, OPU), a flexible OTN (flexible OTN, FlexO) frame, an optical service unit (optical service unit, OSU), or the like. The data frame may alternatively have another frame structure applicable to an optical network.

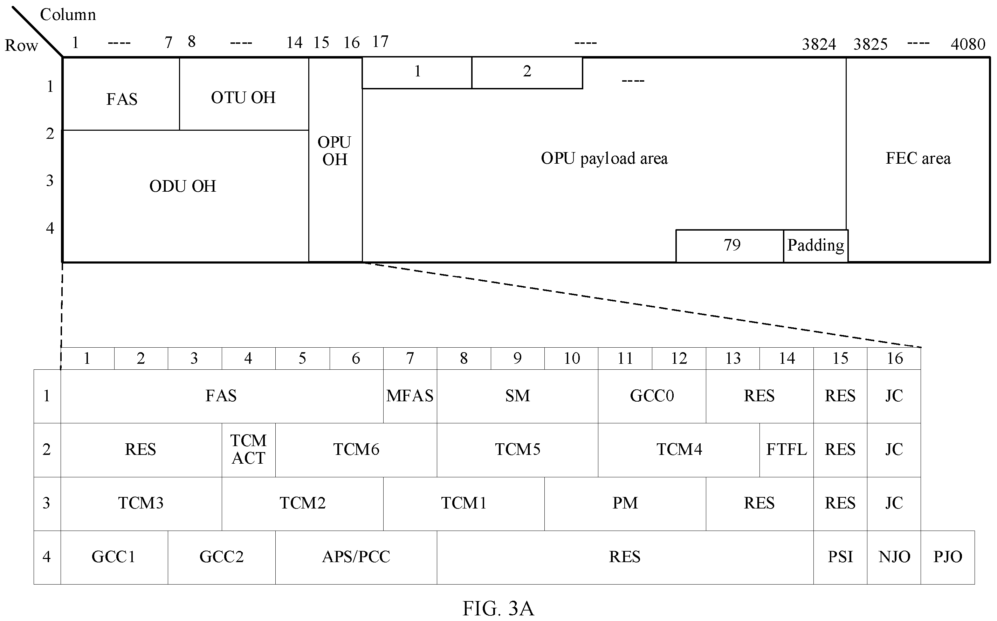

FIG. 3A is a diagram of a structure of an OTN frame. The OTN frame may be of a structure of 4×4080 bits (bit), that is, 4 rows×4080 columns. The structure of the OTN frame includes a frame alignment area, an OTU overhead (overhead, OH), an ODU OH, an optical payload unit (optical payload unit, OPU) OH, an OPU payload area (payload area), and a forward error correction (forward error correction, FEC) area. First 16 columns are overhead bytes, last 256 columns are the FEC check area, and 3808 columns in the middle are the payload area. A frame alignment overhead may include two parts: a frame alignment signal (frame alignment signal, FAS) and a multiframe alignment signal (multiframe alignment signal, MFAS). A plurality of OTN frames constitute one OTN multiframe. For example, eight OTN frames constitute one OTN multiframe. An OPUk is used to carry service data, and includes an OPU payload area and an OPU OH, where k represents a bit rate of the OPU. k=1, 2, 3, and 4 correspond to 2.5G, 10G, 40G, and 100G bit rates respectively. k=flex indicates an OPUflex, and may correspond to any bit rate, and the OPUflex is used to carry only a single-channel service. k=Cn indicates an OPUCn, and corresponds to a bit rate of n×100G. The ODUk is used to support an information structure of the OPUk, and includes the OPUk and an ODUk OH. Similarly, a capacity of the ODUk is distinguished by k. The ODUflex includes an OPUflex and an ODUflex OH. An ODUCn includes an OPUCn and an ODUCn OH. An OTUk includes an ODUk, an FEC area, and an OTUk OH. An OTUCn includes an ODUCn and an OTUCn OH, and does not include the FEC area.

A justification control byte (justification Control, JC) in the OPU overhead is used for data channel maintenance and performance monitoring. A reserved byte (RES) is a field in the OPU overhead, and indicates redundancy information in a protection overhead. Positive justification opportunity byte (positive justification opportunity, PJO) and negative justification opportunity byte (negative justification opportunity, NJO). The PJO is an overhead used to determine an optical load structure. The PJO may help a receiving end correctly parse an optical signal, to extract payload data. A size of an PJO overhead depends on a type of an optical load structure and a quantity of data frames. Functions of the NJO and the PJO are to ensure that an optical signal in an OTN can be correctly transmitted and parsed in the network. A payload structure identifier (payload structure identifier, PSI) in the OPU overhead is a field used to identify a payload structure, and indicates information such as a format, type, and length of data in the OPU.

An area corresponding to a multiframe alignment sequence MFAS being 1 is a reserved byte. An area corresponding to a multiframe alignment sequence MFAS ranging from 2 to 17 is a multiplex structure identifier MSI. The MSI area includes multiplex structure information of a low-rate ODUj tributary signal in a high-rate OPUk signal. A position of the low-speed tributary signal in an OPU payload area may be determined based on an MSI indication.

TCM1 to TCM6 are ODU overheads used to transmit monitoring and control information, to ensure transmission quality and reliability. TCM1 to TCM6 may also monitor a transmission state of the ODU, such as a transmission error rate, delay, and packet loss, to ensure that data is not damaged or lost during transmission. TCM1: used for bit error monitoring (BIP-8) and a frame synchronization signal in a transmission channel. TCM2: used for transmission of partial cross-connect overheads and port information in segment monitoring. TCM3: used for transmission of all cross-connect overheads and port information in path monitoring. TCM4: used for transmission of path performance monitoring information (PM) and partial cross-connect overhead information. TCM5: used for transmission of physical location information of channel maintenance personnel and partial cross-connect overhead information. TCM6: used for transmission of protection overhead information and all cross-connect overhead information. A specific function of each TCM channel is to support transmission and monitoring of an ODUk frame.

A TCMact (TCM Activation) field indicates whether TCM monitoring is enabled for an ODUk channel. If TCMact is 1, TCM monitoring is enabled for the channel. If TCMact is 0, TCM monitoring is disabled for the channel.

A regenerator section overhead byte (Regenerator Section Overhead Byte, RES) is an overhead byte in the ODUk, and is used to transmit information when an optical signal passes through a regenerator. Fixed transport frame overhead (Fixed Transport Frame Overhead, FTFL): The FTFL is a most basic overhead byte in the ODUk and provides necessary management and protection functions. The FTFL includes some necessary control information, such as frame synchronization, frame header error detection, frame counting, and port identification. General communication channel (General Communication Channel, GCC): The GCC is a programmable communication channel in the ODUk, and is used to transmit management and control information related to the ODUk. The GCC may help a network administrator remotely monitor, diagnose, and configure an ODUk device. Automatic protection switching/path communication channel (Automatic Protection Switching/Path Communication Channel, APS/PCC): The APS/PCC is a type of protection overhead byte in the ODUk, and is used to implement automatic protection switching and backup path communication. When a fault occurs on a primary path, the APS/PCC can quickly switch data to a backup path and notify a network administrator. An EXP overhead byte is used to transmit experimental information, such as test data and debugging information. Signal monitoring (Signal Monitoring, SM) is used to monitor quality and strength of a signal. The SM continuously monitors a signal transmitted on an OUTk channel and reports quality of the signal in a timely manner. A GCC0 (General Communication Channel Zero) is used to translate a transmitted signal. A GCC0 in an OTN translates a signal transmitted on the OUTk channel into a standard language in the OTN, so that a receiver can correctly understand the meaning of the signal.

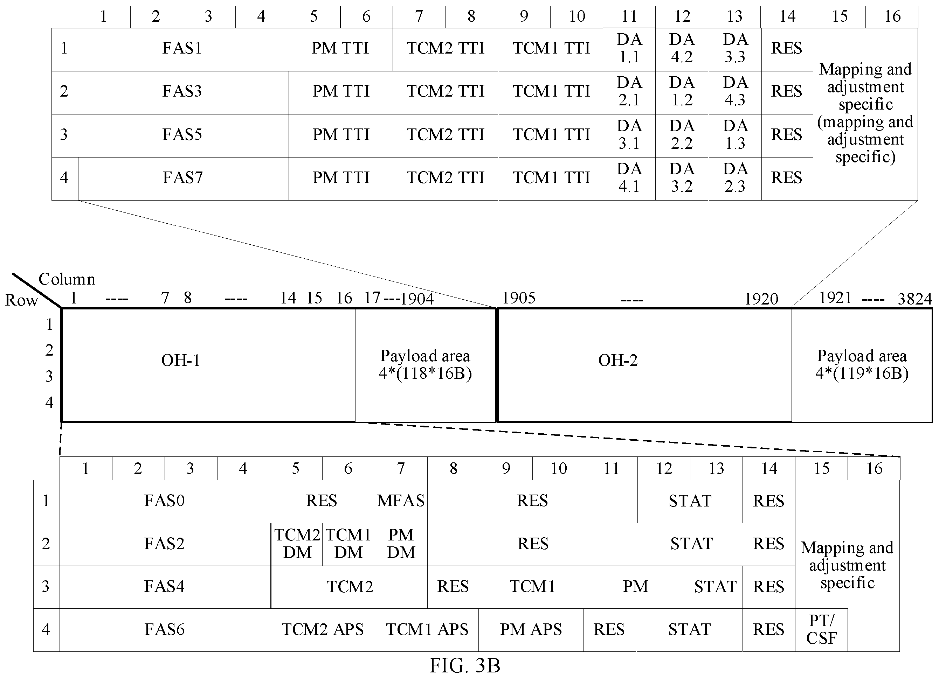

FIG. 3B is a diagram of a structure of an fgODUflex frame. The fgODUflex frame is organized in an octet-based block frame structure with four rows and 3824 columns. The fgODUflex frame includes an overhead area and a payload area. Columns 1 to 14 and columns 1905 to 1918 of the fgODUflex are dedicated to the fgODUflex overhead area. The fgODUflex overhead area includes frame alignment signals (FAS0 to FAS7), a multiframe alignment signal, path monitoring (path monitoring, PM), TCM1, TCM2, and phase difference accumulation (DA). Columns 15 to 1904 and columns 1919 to 3824 of fgODUflex are dedicated to the fgOPUflex area. The fgOPUflex area includes a fgOPUflex framework.

fgODUflex OH information is added to an fgODUflex information payload to create fgODUflex. It includes information for maintenance and operational functions to support fgODUflex connections. The fgODUflex OH consists of fields dedicated to an end-to-end fgODUflex path and two levels of tandem connection monitoring. The PM/TCM1/TCM2 field contains the following subfields: trail trace identifier (TTI), bit interleaved parity (BIP-8), backward defect indication, backward error indication and backward incoming alignment error (BEI/BIAE), status bits (STAT) indicating the presence of a maintenance signal, delay measurement (DM), and automatic protection switching (APS). It should be noted that the BIAE is only applicable to TCM1 or TCM2.

An fgODUflex trail trace identifier (TTI) is defined as a 32-byte string. For PM, an 8-byte TTI field is defined in rows 1 to 4, and columns 1909 and 1910. For TCM1, an 8-byte TTI field is defined in rows 1 to 4, and columns 1913 and 1914. For TCM2, an 8-byte TTI field is defined in rows 1 to 4, and columns 1911 and 1912. Each four frames transmit once complete 32-byte trail trace identifier information for PM, TCM1, or TCM2. The four 8-byte sets in the trail trace identifier are indexed by MFAS [7, 8]. A bit interleaved parity-8 (BIP-8) code is defined in the fgODUflex overhead for error detection. Each fgODUflex BIP-8 is computed over the bits in the fgOPUflex area (columns 15 to 1904 and columns 1919 to 3824) of an fgODUflex frame #i, and is inserted in a fgODUflex BIP-8 overhead location in an fgODUflex frame #i+2. For PM, BIP-8 is located in row 3 and column 11. For TCM1, BIP-8 is located in row 3 and column 8. For TCM2, BIP-8 is located in row 3 and column 5.

(4) Path monitoring (path monitoring, PM) provides an end-to-end path monitoring function. A monitoring scope of tandem connection monitoring (tandem connection monitoring, TCM) is a part of a monitoring scope of PM.

In an OTN, there are six levels of TCM overheads (overhead, OH). TCM includes a trail trace identifier (trail trace identifier, TTI), bit interleaved parity-8 (bit interleaved parity 8, BIP8), a backward defect indication (backward defect indication, BDI), a backward error indication (backward error indication, BEI), a status indicator (status, STAT), and a backward incoming alignment error (backward incoming alignment error, BIAE). A TCM function may be configured for a node that requires the TCM function. For each node, TCM in a source direction (also referred to as a sending direction) and TCM in a sink direction (also referred to as a receiving direction) may be configured in different modes or in the same mode.

In the sending direction, an operational (operational) mode and a transparent (transparent) mode are available. If a mode of a level of TCM used by a network device is the operational mode, the network device performs regeneration processing on this level of TCM, for example, inserts BIP-8, BEI, BIAE, BDI, and TTI. If a mode of a level of TCM used by the network device is the transparent mode, the network device does not process this level of TCM.

In the receiving direction, an operational mode, a transparent mode, or a monitoring mode is available. If a mode of a level of TCM used by the network device is the operational mode, the network device monitors this level of TCM. For example, BIP-8, BEI, BIAE, BDI, and TTI overheads are monitored, and corresponding defects are generated and processed. For example, an AIS is inserted or a trail signal fail (Trail signal fail, TSF) is generated. If a mode of a level of TCM used by the network device is the monitoring mode, the network device monitors this level of TCM. For example, BIP8, BEI, BIAE, BDI, and TTI overheads are monitored, and corresponding defects are generated. However, subsequent AIS or TSF actions are not performed. If a mode of a level of TCM used by the network device is the transparent mode, the network device does not process this level of TCM.

(5) Subnetwork connection protection (sub-network connection protection, SNCP) is pre-arrangement of a dedicated protection route for a subnetwork connection. Once a fault occurs in a subnetwork, the dedicated protection route takes over a transmission task of the subnetwork in an entire network. A protection channel and a working channel in each transmission direction of the SNCP use different routes. For example, a service is transmitted between a node A and a node B through SNCP. That is, the node A transmits the service to the node B through a subnetwork 1 (a working subnetwork connection (sub-network connection, SNC), that is, a working channel) and a subnetwork 2 (a protection SNC, that is, a protection channel) in a bridging manner, and the node B selects one channel of service information from two directions according to a switching rule through a switch. The node B performs subnetwork connection protection group switching, that is, switches receiving the service from the node A through the subnetwork 1 to receiving the service from the node A through the subnetwork 2.

The SNCP adopts a dual-fed and selective receiving mode. In normal cases, the working SNC is selected to receive a service. When the working SNC is faulty, the protection SNC is selected to receive a service.

The SNCP includes non-intrusively monitored subnetwork connection protection (non-intrusively monitored sub-network connection protection, SNCP/N, or SNCN) and subnetwork connection protection with sublayer monitoring (SNCP with sublayer monitoring, SNCP/S, or SNCS). A monitoring method used in the SNCP/N is detecting a signal based on end-to-end or sublayer overheads or operation, administration and maintenance (operation administration and maintenance, OAM) information. The SNCP/S detects defects at a service layer, continuity/connectivity defects at a layer network, and bit error deterioration at the layer network, to implement monitoring by using a sublayer overhead/OAM. The SNCP/S uses an SF alarm in a PM layer at the service layer and an SF alarm in a TCM layer at this layer as switching conditions. The overhead may be, for example, PM or TCM.

(6) An alarm indication signal (alarm indication signal, AIS) is a type of maintenance signal in an OTN network. The AIS is used to transmit alarm information, that is, to transmit a service failure signal of an upstream node to a downstream node or transmits signal failure information of a service layer to a client layer. An AIS maintenance frame and a data frame may use the same format. An indication field included in an overhead of the AIS maintenance frame may be an STAT field in a PM overhead or an STAT field in a TCM overhead. Table 1 describes meanings of different STAT values in the PM overhead. For example, when the indication field included in the overhead of the AIS maintenance frame may be the STAT field in the PM overhead, a value of the STAT in the PM overhead is 111.

**Table 1**

| Value of PM STAT | Meaning |
|---|---|
| 000 | Reserved for future international standardization |
| 001 | Normal path signal |
| 010 | Reserved for future international standardization |
| 011 | Reserved for future international standardization |
| 100 | Reserved for future international standardization |
| 101 | Maintenance signal: LCK |
| 110 | Maintenance signal: OCI |
| 111 | Maintenance signal: AIS |

Table 2 describes meanings of different STAT values in the TCM overhead. For example, when the indication field included in the overhead of the AIS maintenance frame may be the STAT field in the TCM overhead, a value of the STAT field in the TCM overhead is 111.

**Table 2**

| Value of TCM STAT | Meaning |
|---|---|
| 000 | No tandem connection monitoring at a source end |
| 001 | Tandem connection monitoring active at the source end, without IAE (normal signal) |
| 010 | Tandem connection monitoring active at the source end, with IAE |
| 011 | Reserved for future international standardization |
| 100 | Reserved for future international standardization |
| 101 | Maintenance signal: LCK |
| 110 | Maintenance signal: OCI |
| 111 | Maintenance signal: AIS |

For example, when the overhead of the AIS maintenance frame includes the TCM overhead and the PM overhead, if the TCM overhead indicates that no alarm is generated (or no fault is detected), a value of STAT in the PM overhead is 111, and a value of STAT in the TCM overhead is 001.

(7) Framing. Framing is used to identify a start position of a data frame. Overheads of the data frame in embodiments of this application include framing indication information (also referred to as a framing identifier) and overhead information used for management, monitoring, and maintenance. For example, the framing indication information may include a frame alignment signal (frame alignment signal, FAS) or an alignment marker (alignment marker, AM). The overhead information used for management, monitoring, and maintenance may include TMC overheads, for example, overheads such as BIP-8, BEI, BIAE, BDI, and TTI. In some scenarios, the overhead information further includes information other than FAS, AM, and TCM overheads.

(8) Upstream or downstream. For example, a transmission link between a device A and a device B passes through a device M. When data is transmitted from the device A to the device B, in a data transmission direction, the device M is located between the device A and the device B, the device A is in an upstream direction of the device M, and the device B is in a downstream direction of the device M. In the transmission direction from the device A to the device B, the device A is a source end device, and the device B is a sink end device. Conversely, when data is transmitted from the device B to the device A, in a data transmission direction, the device M is located between the device A and the device B, the device B is in an upstream direction of the device M, and the device A is in a downstream direction of the device M. In the transmission direction from the device B to the device A, the device B is a source end device, and the device A is a sink end device.

In addition, in the descriptions of this application, "a plurality of" means two or more than two unless otherwise specified. In addition, "/" indicates an "or" relationship between associated objects. For example, A/B may indicate A or B. In this application, "and/or" describes only an association relationship between associated objects, and indicates that three relationships may exist. For example, A and/or B may indicate the following three cases: Only A exists, both A and B exist, and only B exists, where A or B may be in a singular form or a plural form. In addition, in embodiments of this application, terms such as "first" and "second" are used to distinguish between same objects or similar objects whose functions and purposes are basically the same, to clearly describe the technical solutions in embodiments of this application. A person skilled in the art may understand that the terms such as "first" and "second" do not limit a quantity or an execution sequence, and the terms such as "first" and "second" do not indicate a definite difference. It should be further noted that specific descriptions of some technical features in one embodiment may also be used to explain corresponding technical features mentioned in another embodiment, unless otherwise specified.

Embodiments of this application may be applied to a cascaded protection scenario and a segment protection scenario, for example, in a cascaded protection scenario and a segment protection scenario of an fgOTN pipe. Certainly, this application is also applicable to a cascaded protection scenario and a segment protection scenario of another pipe, provided that switching delay increases with hop count and causes a problem that switching performance exceeds a limit.

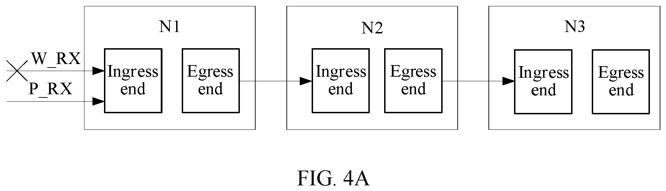

FIG. 4A is a diagram of a non-cascaded segment protection scenario. In FIG. 4A, an fgOTN pipe scenario is used as an example. In FIG. 4A, N1, N2, and N3 are three network nodes. A pass-through path of an fgOTN pipe passes through N1, N2, and N3. SNCP is configured on the node N1, but not on the nodes N2 and N3. In FIG. 4A, W_RX is a working path at a receiving end, P_RX is a protection path at the receiving end, and TX represents a transmitting end. The receiving end may also be referred to as an ingress end (in), and the transmitting end may also be referred to as an egress end (out). The following describes a protection switching procedure with reference to FIG. 4A.

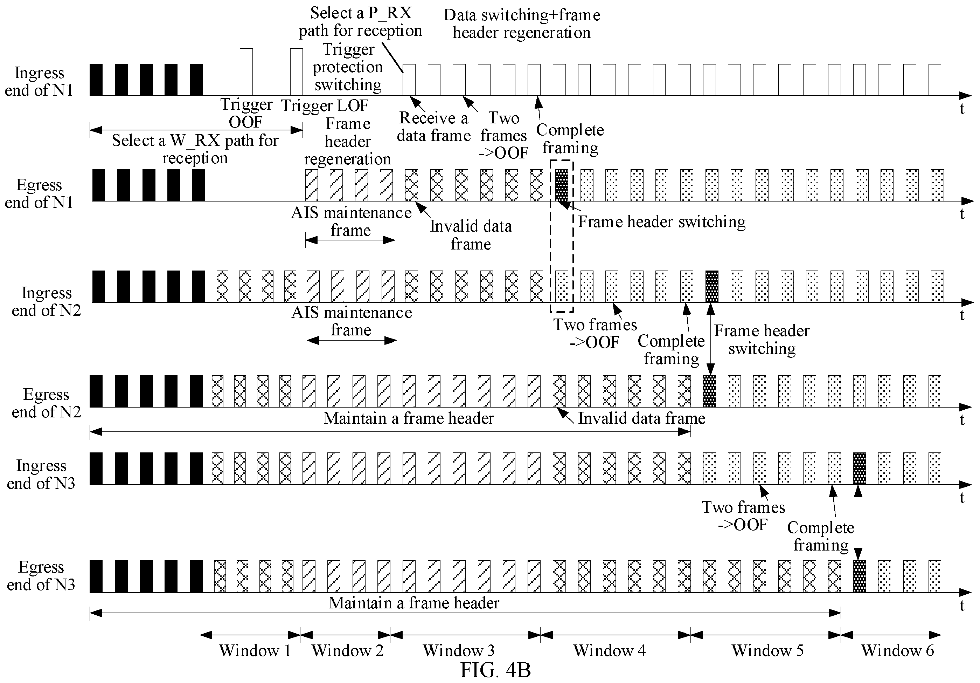

State 1: Before a fault occurs, SNCP protection at N1 receives service data (or a data frame or a signal) through the working path W_RX and forwards the service data to the node N2 in a TX direction. Because the nodes N2 and N3 are not configured with protection, they receive signals from RX directions and send signals in TX directions. As shown in FIG. 4B, service data indicated by black bars is transmitted along W_RX@N1->N2->N3.

State 2: The fault occurs on the SNCP working path of the node N1. That is, no signal is input through the W_RX path of the node N1. The fault finally triggers protection switching for SNCP of N1, and N1 is updated to receive a data frame through the P_RX path. However, in a time window before the node N1 performs protection switching, after the fault occurs on W_RX, the node N1 senses the fault on W_RX, and then starts SNCP switching to complete SNCP switching and switch to receive the data frame through P_RX.

State 2.1: Window 1: After the fault occurs on W_RX, the node N1 senses the fault on W_RX. In this period, the TX direction of N1 (N1.TX for short) continues sending by using an original frame header position (that is, an original framing position) of a data frame. Because no signal is input, an invalid data frame sent in N1.TX is maintained in the pre-fault framing position (that is, an original position of a framing identifier is maintained, that is, the invalid data frame is sent based on a framing start position of the data frame received through W_RX), and a payload area is filled with invalid information. In this case, the downstream nodes N2 and N3 do not sense any fault, as shown in FIG. 4B.

For example, a position of a framing identifier of the invalid data frame sent in N1.TX is determined based on the frame header position (or a start sequence number of a frame period) of the valid data frame received through W_RX. For example, the frame header position (the start sequence number of the frame period) may be a start byte or bit of the frame period.

For example, an fgOTN frame is used as an example. A frame header position (a start sequence number of a frame period) is 0, and a fixed quantity of bytes occupied by the fgOTN frame is 4*3824. In this case, a position of an alignment identifier of the data frame is 0+4*3824*i, where i represents an i^{th} frame, and i=0, 1, ...

State 2.2: Window 2: In a period from detecting the fault on W_RX by N1 to completing SNCP switching by N1, N1 has detected the fault on W_RX and therefore inserts an AIS maintenance frame of the fgOTN pipe in the N1.TX direction. In a period of sending the AIS maintenance frame in N1.TX, the original position of the framing identifier is maintained. In this case, the downstream nodes N2 and N3 receive the AIS maintenance frame and sense the fault.

State 3: The node N1 completes SNCP switching, and selects P_RX for reception, to restore an E2E service.

State 3.1: Window 3: First, N1 receives a data frame through N1.P_RX. In this period, framing of an N1.P_RX signal needs to be completed at N1.RX. For example, after N1.RX consecutively receives two data frames, an LOF state is updated to an OOF state, and then N1.RX continues to consecutively receive two data frames to complete the framing operation. In addition, during the framing operation performed at N1.RX, N1.RX continues sending the AIS maintenance frame or the invalid data frame by using the original frame header (that is, in the original position of the alignment identifier). After framing a signal from N1.P_RX is completed in the N1.TX direction, N1.TX does not send the AIS maintenance frame or the invalid data frame, and instead, sends a signal by using a new frame header. In this case, a service of the node N1 is restored.

For example, a position of a framing identifier of the invalid data frame sent in N1.TX is determined based on the frame header position (or the start sequence number of the frame period) of the valid data frame received through W_RX. For example, the frame header position (the start sequence number of the frame period) may be a start byte or bit of the frame period. For example, an fgOTN frame is used as an example. A frame header position (a start sequence number of a frame period) is 0, and a fixed quantity of bytes occupied by the fgOTN frame is 4*3824. In this case, a position of an alignment identifier of the data frame is 0+4*3824*i, where i represents an i^{th} frame, and i=0, 1, ...

However, a frame header position on the N1.P_RX path has an offset relative to that on N1.W_RX, and therefore, re-framing needs to be performed and a subsequent alignment rule needs to be determined. For example, the frame header position on the N1.P_RX path is offset by 50 bytes relative to that on N1.W_RX. After framing, it is determined that an alignment rule satisfies 50+4*3824*i, and a re-framing operation is completed.

State 3.2: In the window 3, in an N2.RX direction, the AIS maintenance frame continues to be received by using the original frame header. Window 4: When the service of the node N1 is restored, service data is sent in the N1.TX direction by using the new frame header. In this period, the original frame header cannot be used for framing in the N2.RX direction, and N2.RX enters a re-framing state. During re-framing at N2.RX, in an N2.TX direction, the AIS maintenance frame/invalid signal is sent by using the pre-fault original frame header. After re-framing is completed at N2.RX, N2.TX sends a signal by using the new frame header. In this case, a service of the node N2 is restored.

State 3.3: In the window 4, in an N3.RX direction, the AIS maintenance frame continues to be received by using the original frame header. Window 5: When the service of the node N2 is restored, a signal is sent in the N2.TX direction by using the new frame header. In this period, the original frame header cannot be used for framing in the N3.RX direction, and N3.RX enters a re-framing state. In this period, in an N3.TX direction, the AIS maintenance frame is sent by using the pre-fault original frame header. Window 6: After re-framing is completed at N3.RX, N3.TX sends a signal by using the new frame header. In this case, a service of the node N3 is restored.

As shown above, due to frame header regeneration, switching performance is related to hop count. Therefore, E2E fgOTN protection switching performance cannot be ensured.

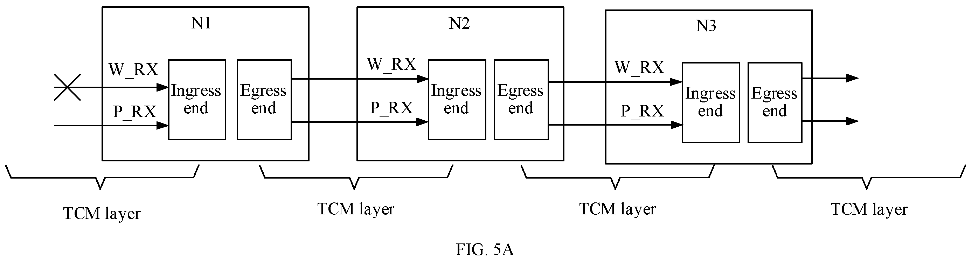

FIG. 5A is a diagram of a cascaded segment protection scenario. In FIG. 5A, an fgOTN pipe scenario is used as an example. In FIG. 5A, N1, N2, and N3 are three network nodes. A pass-through path of an fgOTN pipe passes through N1, N2, and N3. SNCP/S (SNCS for short) is configured on all the nodes N1, N2, and N3. In FIG. 5A, W_RX is a working path at a receiving end, P_RX is a protection path at the receiving end, and TX represents a transmitting end. The receiving end may also be referred to as an ingress end (in), and the transmitting end may also be referred to as an egress end (out). TCM regeneration is used in N1.TX <-->N2.W_RX&N2.P_RX and N2.TX <->N3.W_RX&N3.P_RX. The node N2 cannot sense an AIS maintenance frame inserted by the node N1. Similarly, the node N3 cannot sense an AIS maintenance frame inserted by the node N2. The following describes a protection switching procedure with reference to FIG. 5A.

State 1: Before a fault occurs, SNCS protection at N1 receives service data (a data frame) through the working path W_RX and forwards the service data to the node N2 and the node N3 in a TX direction.

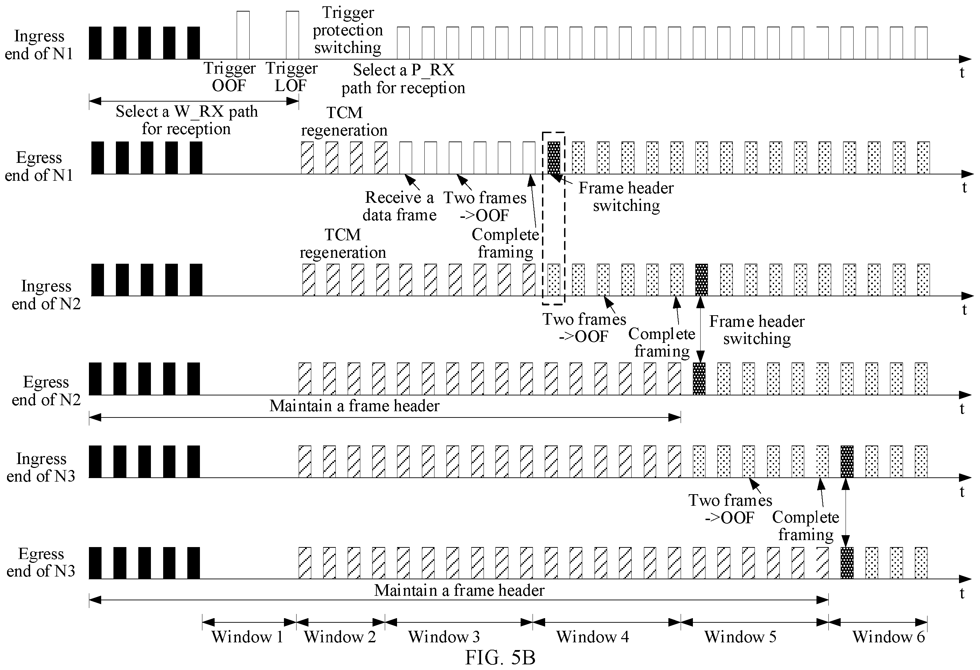

As shown in FIG. 5B, service data indicated by black bars is transmitted along N1.W_RX->N1.TX->N2.W_RX->N2.TX->N3.W_RX->N3.TX.

State 2: The fault occurs on the SNCS working path of the node N1, and no signal is input through the W_RX path of N1. The fault finally triggers SNCS protection of N1 to perform protection switching. That is, N1 is updated to receive a signal through P_RX. However, in a time window before the node N1 performs protection switching, a fault occurs on W_RX, N1 senses the fault on W_RX, and then starts SNCS switching to complete SNCS switching and switch to receive a signal through P_RX.

State 2.1: Window 1: In a period from occurrence of the fault on W_RX to sensing the fault on W_RX by N1, N1.TX continues sending by using an original frame header. Because no signal is input, an N1.TX signal maintains a pre-fault frame header position, and a payload area is filled with invalid information. That is, N1.TX sends an invalid data frame. In this case, the downstream nodes N2 and N3 do not sense any fault.

State 2.2: Window 2: In a period from detecting the fault on W_RX by N1 to completing SNCP switching by N1, N1 has detected the fault on W_RX and therefore inserts an AIS maintenance frame of the fgOTN path in the N1.TX direction. When N1.TX sends the AIS maintenance frame, the original frame header is maintained. In an SNCS protection scenario, TCM overhead regeneration occurs. Therefore, the downstream nodes N2 and N3 do not sense any fault.

State 3: N1 completes the SNCS switching, and selects P_RX for reception, to restore E2E services.

State 3.1: Window 3: First, N1 receives a signal through N1.P_RX. In this period, framing of an N1.P_RX signal needs to be completed at N1.RX. For example, after two data frames are consecutively received in the N1.RX direction, an LOF state is updated to an OOF state, and then two data frames continue to be consecutively received, to complete a framing operation. In addition, when framing is performed at N1.RX, a TCM overhead regeneration signal is sent at N1.TX by using the original frame header. After re-framing of the N1.P_RX signal is completed at N1.RX, N1.TX sends a signal by using a new frame header. In this case, a service of the node N1 is restored.

State 3.2: In the window 3, in an N2.W_RX direction, a fault-free signal continues to be received by using the original frame header. Window 4: When the service of the node N1 is restored, a signal is sent in the N1.TX direction by using the new frame header. In this period, the original frame header cannot be used for framing in the N2.W_RX direction, and N2.W_RX enters a re-framing state. During framing at N2.RX, N2.TX sends a TCM regeneration signal by using the pre-fault original frame header. After re-framing is completed at N2.W_RX, N2.TX sends a signal by using the new frame header. In this case, a service of the node N2 is restored.

State 3.3: N1 completes SNCP switching, and selects P_RX for reception, to restore a service of N3. In the window 4, a fault-free signal continues to be received in an N3.W_RX direction by using the original frame header. Window 5: When the service of the node N2 is restored, a signal is sent in the N2.TX direction by using the new frame header. In this period, the original frame header cannot be used for framing in the N3.W_RX direction, and N3.W_RX enters a re-framing state. During framing at N3.RX, in an N3.TX direction, a TCM overhead regeneration signal is sent by using the pre-fault original frame header. Window 6: After re-framing is completed at N3.W_RX, N3.TX sends a signal by using the new frame header. In this case, a service of the node N3 is restored.

As described above, in the SNCS scenario, TCM overheads are regenerated segment by segment. However, due to impact of frame header regeneration, each node needs to perform re-framing hop by hop. As a result, E2E fgOTN protection switching performance cannot be ensured.

Based on this, an embodiment of this application provides a protection switching method for an optical transport network, to prevent each downstream node of a fault from continuously transmitting an AIS by using an original frame header, so that all nodes can start re-framing from the same frame, and switching delay does not increase with hop count, thereby avoiding impact on switching performance.

The following separately describes the solutions provided in embodiments of this application from perspectives of a network device on which a fault occurs and a downstream network device of the network device on which the fault occurs.

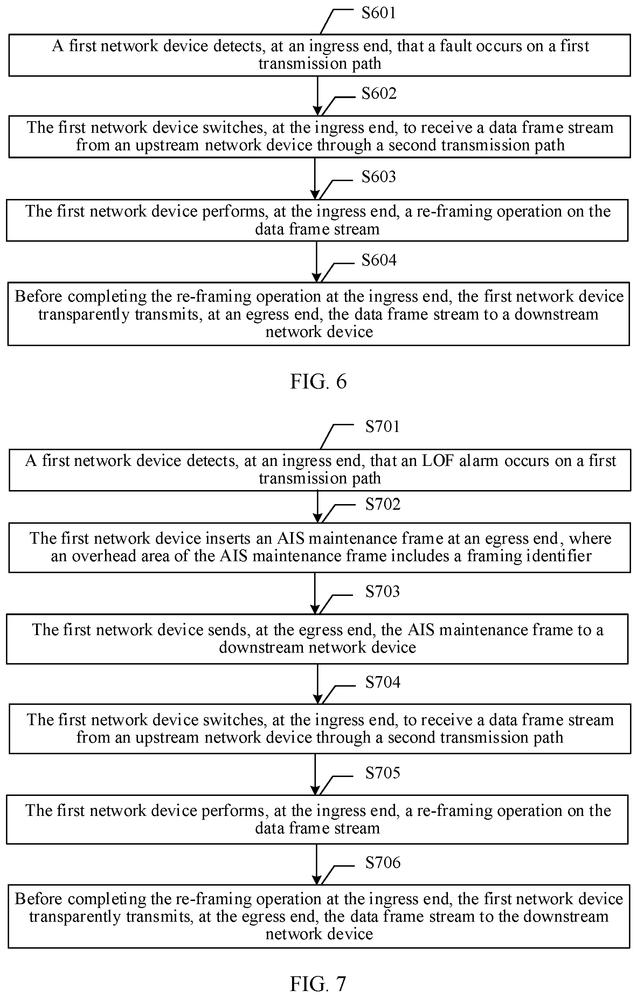

FIG. 6 is a schematic flowchart of a protection switching method for an optical network according to an embodiment of this application. An example in which a node on which a fault occurs is a first network device is used. An SNCP group is configured between the first network device and an upstream network device of the first network device. There are two transmission paths (or two transmission channels) between the first network device and the upstream network device of the first network device: a first transmission path and a second transmission path. One transmission path is used as a working path, and the other transmission path is used as a protection path. An ingress end and an egress end exist on the first network device, and the ingress end is configured to connect the first network device and the upstream network device of the first network device. The egress end is configured to connect the first network device and a downstream network device of the first network device.

S601: The first network device detects, at the ingress end, that a fault occurs on the first transmission path.

For example, the first network device detects, at the ingress end, that an LOF alarm occurs on the first transmission path. For example, a data frame stream (which may also be referred to as a data stream for short) is transmitted between the first network device and the upstream network device. In a process of transmitting the data frame stream between the first network device and the upstream network device, if a frame header cannot be determined for several consecutive frames (for example, two frames), the first network device detects an OOF alarm at the ingress end. Further, if errors are detected in the received A1 and A2 bytes in several consecutive frames, the LOF alarm is detected.

S602: The first network device switches, at the ingress end, to receive the data frame stream from the upstream network device through the second transmission path.

S603: The first network device performs, at the ingress end, a re-framing operation on the data frame stream.

S604: Before completing the re-framing operation at the ingress end, the first network device transparently transmits, at the egress end, the data frame stream to the downstream network device.

Before completing the re-framing operation, the first network device transparently transmits, to the egress end, the data frame stream received through the second transmission path, and then the egress end transparently transmits the data frame stream to the downstream network device. Transparent transmission means not changing an alignment identifier in the received data frame stream. In the conventional technology, a framing identifier is added according to a framing rule before protection switching in a re-framing process. After receiving a data frame of this type, a downstream node may perform framing, and does not start re-framing. Therefore, each downstream node needs to wait until its upstream node completes re-framing, and then starts its own re-framing only after sending the data frame stream by using a new frame header. However, in this embodiment of this application, after receiving a transparently transmitted data frame stream, each downstream node can start re-framing without waiting for upstream nodes to complete re-framing. When transmission delay is ignored, it may be understood that downstream nodes at all hops almost simultaneously start a re-framing operation.

Refer to FIG. 7. An example in which the first network device detects, at the ingress end, that an LOF alarm occurs on the first transmission path (S701) and detects a fault is used. In some embodiments, in a process from occurrence of the fault on the first transmission path to detection of the LOF alarm at the ingress end by the first network device, because the first network device does not receive any data frame at the egress end, the first network device may send an invalid data frame (which may also be referred to as an invalid frame for short). It should be noted that the invalid data frame may be sent continuously following the data frame stream, and a position of an alignment identifier of each data frame in the data frame stream is determined based on a frame header position (a start sequence number of a frame period) of the data frame stream. For example, a position of a framing identifier of the invalid data frame sent at the egress end is determined based on a frame header position (a period start sequence number) of a data frame received through the first transmission path. For example, the frame header position (the start sequence number of the frame period) may be a start byte or bit of the frame period. For example, an fgOTN frame is used as an example. A frame header position (a start sequence number of a frame period) is 0, and a fixed quantity of bytes occupied by the fgOTN frame is 4*3824. In this case, a position of an alignment identifier of the data frame is 0+4*3824*i, where i represents an i^{th} frame, and i=0, 1, ...

S702: The first network device inserts an AIS maintenance frame at the egress end. An overhead area of the AIS maintenance frame includes a framing identifier. The AIS maintenance frame is also sent based on the original frame header. That is, an insertion position of the framing identifier of the AIS maintenance frame may be determined according to a framing rule of the data frame stream received through the first transmission path. In other words, the insertion position of the framing identifier is determined based on a start sequence number of a frame period of the data frame stream before a fault occurs on the first transmission path.

S703: The first network device sends, at the egress end, the AIS maintenance frame to the downstream network device. Further, the first network device performs S704 to S706. For details, refer to S602 to S604. Details are not described herein again.

In a possible implementation, a pipe to which the data frame stream belongs has a state machine, configured to record a state of the pipe. When detecting, at the ingress end, that the LOF alarm is generated on the first transmission path, the first network device may update the state of the pipe to an alarm indication state. The alarm indication state indicates that a fault (or an alarm) exists in an upstream direction of the first network device. The alarm indication state may also be referred to as an alarm state or a fault state, or may be referred to as a dAIS state, or may be referred to as another name. This is not specifically limited in this embodiment of this application.

In an example, when detecting, at the ingress end, that the LOF alarm is generated on the first transmission path, the first network device may update a state of the pipe at the egress end to the alarm indication state. In another example, when detecting, at the ingress end, that the LOF alarm is generated on the first transmission path, the first network device may update a state of the pipe at the ingress end to the alarm indication state. In still another example, when detecting, at the ingress end, that the LOF alarm is generated on the first transmission path, the first network device may update both states of the pipe at the ingress end and the egress end to the alarm indication state. Certainly, in some scenarios, if the ingress end and the egress end of the first network device are on one board, only one state machine may be configured, and only a state of the state machine needs to be changed. In some other scenarios, if the ingress end and the egress end are on different boards, a state of the state machine of each board may be changed. In some embodiments, the first network device may determine, based on the alarm indication state, that the data frame stream needs to be transparently transmitted. That is, when protection switching is completed and the data frame stream is received, it may be determined, based on the alarm indication state, that the data frame stream needs to be transparently transmitted. It may also be described as follows: The alarm indication state indicates the first network device to transparently transmit, to the downstream network device, the data frame stream received after protection switching.

In some examples, a duration of the alarm indication state may be configured to be greater than or equal to a duration of performing the re-framing operation. Therefore, before the alarm indication state is terminated, the data frame stream may be transparently transmitted at the egress end to the downstream network device. In some other examples, a termination moment of the alarm indication state is later than a completion moment of protection switching. In some implementation scenarios, the alarm indication state may be terminated after the re-framing operation is completed. In a possible example, a termination moment of the alarm indication state is later than or equal to a completion moment of the re-framing operation.

In some possible implementations, an SNCS group may be configured between the first network device and the upstream network device of the first network device, and an SNCS group is also configured between the first network device and the downstream network device of the first network device. Therefore, the overhead area of the AIS maintenance frame sent by the first network device to the downstream network device further includes a PM overhead and a TCM overhead, and the PM overhead indicates that a fault exists on the first network device. The TCM overhead indicates that the fault does not continue to a downstream direction of the first network device. In other words, the downstream network device of the first network device may no longer sense the fault through the TCM overhead.

In a possible example, the TCM overhead of the AIS maintenance frame indicates that the fault does not continue to the downstream direction of the first network device, to indicate the downstream network device to perform non-intrusive monitoring on the PM overhead, but prohibit SNCS switching when it is detected that the PM overhead indicates that a fault exists on the first network device. When the downstream network device detects that the PM overhead indicates that the fault exists on the first network device, an invalid data frame is not sent to a downstream according to a previous framing rule during re-framing, but a received data frame stream is transparently transmitted.

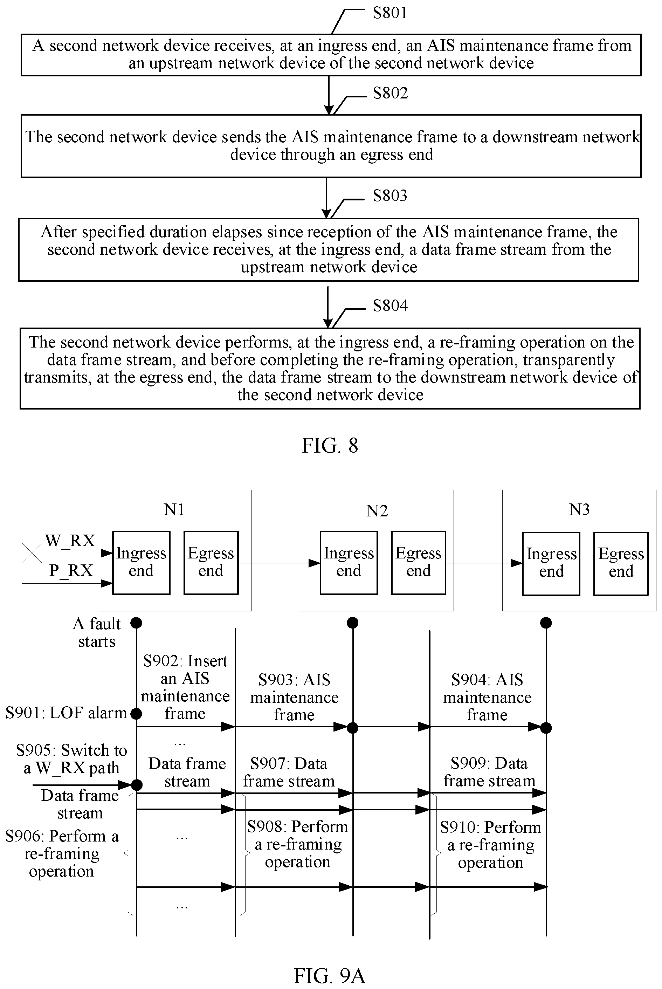

FIG. 8 is a schematic flowchart of another protection switching method for an optical network according to an embodiment of this application. An example in which a downstream node of a node on which a fault occurs is a second network device is used. An ingress end and an egress end exist on the second network device, and the ingress end is configured to connect the second network device and an upstream network device of the second network device. The egress end is configured to connect the second network device and a downstream network device of the second network device.

S801: The second network device receives, at the ingress end, an AIS maintenance frame from the upstream network device of the second network device.

S802: The second network device sends the AIS maintenance frame to the downstream network device through the egress end.

S803: After a specified duration elapses from reception of the AIS maintenance frame, the second network device receives, at the ingress end, a data frame stream from the upstream network device. The data frame stream may be a valid data frame stream, and is used to carry service data.

S803 may be understood as follows: When the ingress end receives the data frame stream, a network device on which a fault occurs in an upstream direction of the second network device has completed protection switching.

S804: The second network device performs, at the ingress end, a re-framing operation on the data frame stream, and before completing the re-framing operation, transparently transmits, at the egress end, the data frame stream to the downstream network device of the second network device.

In a possible implementation, a pipe to which the data frame stream belongs has a state machine, configured to record a state of the pipe. When receiving the AIS maintenance frame, the first network device may update, to an alarm indication state, the state of the pipe to which the data frame stream belongs. The alarm indication state indicates that a fault (or an alarm) exists in the upstream direction of the second network device. In an example, when the second network device receives the AIS maintenance frame, the second network device may update a state of the pipe at the egress end to the alarm indication state. In another example, when the second network device receives the AIS maintenance frame, the first network device may update a state of the pipe at the ingress end to the alarm indication state. In still another example, when the first network device receives the AIS maintenance frame, the first network device may update both states of the pipe at the ingress end and the egress end to the alarm indication state. Certainly, in some scenarios, if the ingress end and the egress end of the first network device are on one board, only one state machine may be configured, and only a state of the state machine needs to be changed. In some other scenarios, if the ingress end and the egress end are on different boards, a state of the state machine of each board may be changed.

In some examples, a duration of the alarm indication state may be configured to be greater than or equal to a duration of performing the re-framing operation. Therefore, before the alarm indication state is terminated, the data frame stream may be transparently transmitted at the egress end to the downstream network device. That is, during re-framing, a received data frame stream carrying service data is transparently transmitted. In some other examples, a termination moment of the alarm indication state is later than a completion moment of protection switching. In some implementation scenarios, the alarm indication state may be terminated after the re-framing operation is completed. In a possible example, a termination moment of the alarm indication state is later than or equal to a completion moment of the re-framing operation.

This application may be applied to an end-to-end networking manner. In end-to-end networking, SNCP groups may be configured for all nodes or some nodes. In an implementation scenario, no SNCP group is configured between the second network device and the upstream network device of the second network device.

In another implementation scenario, an SNCP group, for example, an SNCS group, is also configured between the second network device and the upstream network device of the second network device. The overhead area of the AIS maintenance frame received by the second network device further includes a PM overhead and a TCM overhead. The PM overhead indicates that a fault exists in the upstream direction of the second network device, and the TCM overhead indicates that the fault does not continue to the second network device. When receiving the AIS maintenance frame, the second network device may perform non-intrusive monitoring on the AIS maintenance frame, to transparently transmit, at the egress end, the data frame stream to the downstream network device of the second network device when determining that the PM overhead indicates that the fault exists in the upstream direction of the second network device.

In some possible scenarios, when the alarm indication state is used, when receiving the AIS maintenance frame, the second network device may perform non-intrusive monitoring on the AIS maintenance frame, to update the pipe state to the alarm indication state when determining that the PM overhead indicates that the fault exists in the upstream direction of the second network device.

This application may be applied to an end-to-end networking manner. In end-to-end networking, SNCP groups may be configured for all nodes (for example, in a cascaded protection switching scenario) or SNCP groups may be configured for some nodes (for example, in a non-cascaded protection switching scenario). The following describes solutions provided in embodiments of this application with reference to two scenarios.

FIG. 9A is a schematic flowchart of a protection switching method for an optical transport network according to an embodiment of this application. In FIG. 9A, the non-cascaded segment protection scenario described in FIG. 4A is used as an example. That is, one fgOTN path that passes through N1, N2, and N3 is used as an example. SNCP is configured on the node N1, but not on the nodes N2 and N3. W_RX is a working path at a receiving end, P_RX is a protection path at the receiving end, and TX represents a transmitting end. The receiving end may also be referred to as an ingress end (in), and the transmitting end may also be referred to as an egress end (out).

S901: N1 detects, at an ingress end, that an LOF alarm exists on W-RX.

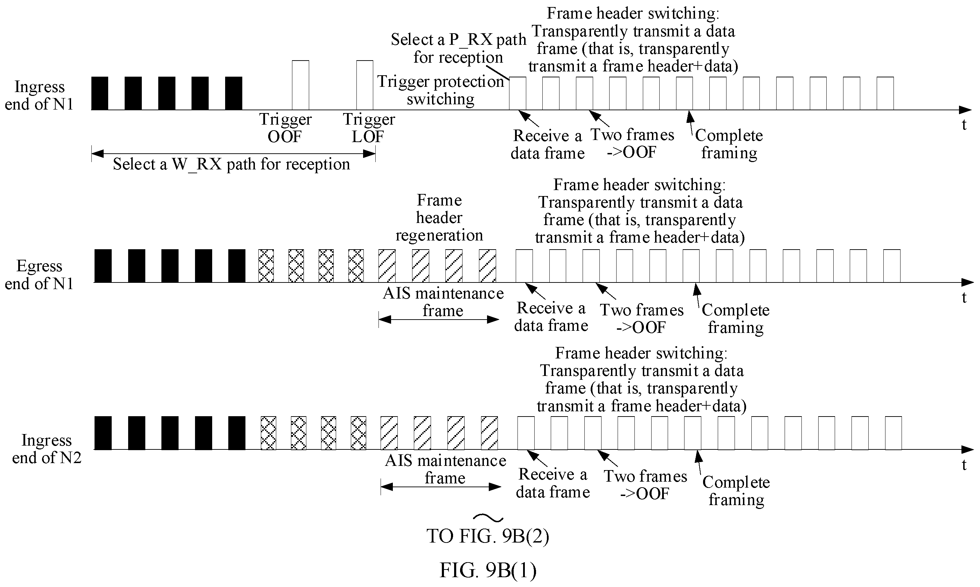

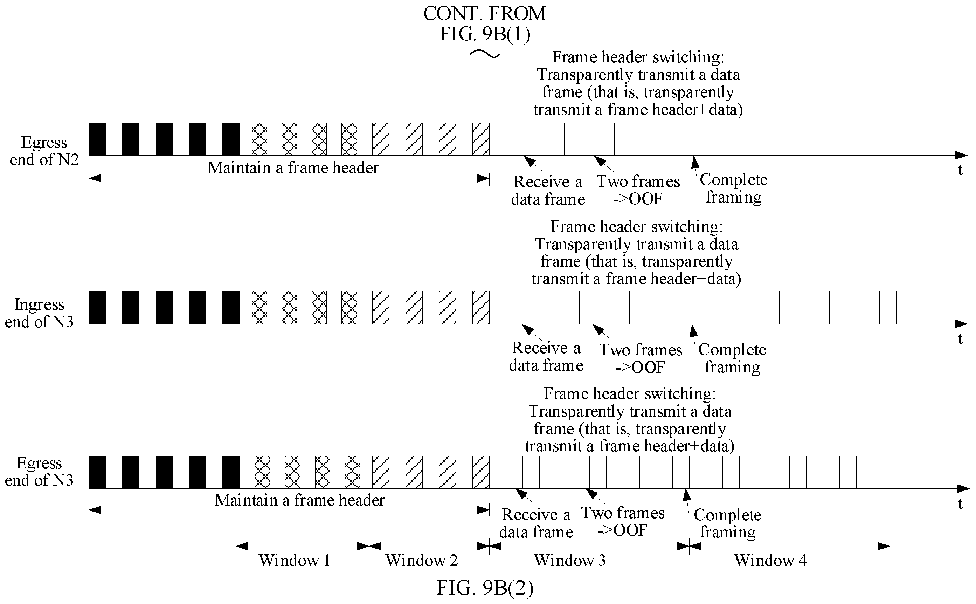

As shown in FIG. 9B(1) and FIG. 9B(2), in a state 1: Before a fault occurs, SNCP protection at N1 receives a data frame stream through the working path W_RX, and forwards the data frame stream to the node N2 through an egress end. Because the nodes N2 and N3 are not configured with protection, they receive signals from RX directions and send signals in TX directions. As shown in FIG. 9B(1) and FIG. 9B(2), data frames indicated by black bars are transmitted along W_RX@N1->N2->N3.

State 2: The fault occurs on the SNCP working path of the node N1. That is, no signal is input through the W_RX path of the node N1.

State 2.1: Window 1: After the fault occurs on W_RX, the node N1 senses the fault on W_RX. In this period, the egress end of N1 continues sending by using an original frame header position (that is, an original framing position) of a data frame. Because no signal is input, an invalid data frame sent through the egress end of N1 is maintained in the pre-fault framing position (that is, an original position of a framing identifier is maintained, that is, the invalid data frame is sent based on a framing start position of the data frame received through W_RX), and a payload area is filled with invalid information. In this case, the downstream nodes N2 and N3 do not sense any fault, as shown in FIG. 9B(1) and FIG. 9B(2).

S902: N1 inserts an AIS maintenance frame at the egress end. The AIS maintenance frame is also sent based on the original frame header. That is, an insertion position of a framing identifier of the AIS maintenance frame may be determined according to a framing rule of a data frame stream received through the first transmission path. In other words, the insertion position of the framing identifier is determined based on a start sequence number of a frame period of the data frame stream before a fault occurs on the first transmission path.

State 2.2: Window 2: In a period from detecting the fault on W_RX by N1 to completing SNCP switching by N1, N1 has detected the fault on W_RX and therefore inserts an AIS maintenance frame of the fgOTN path at the egress end. In a period of sending the AIS maintenance frame at the egress end of N1, the original position of the framing identifier is maintained.

S903: N1 sends, at the egress end, the AIS maintenance frame to N2, so that N2 receives the AIS maintenance frame through an ingress end.

In the window 2, the node N2 receives the AIS maintenance frame and senses the fault.

S904: N2 sends, at an egress end, the AIS maintenance frame to N3, so that N3 receives the AIS maintenance frame through an ingress end.

In the window 2, the node N3 receives the AIS maintenance frame and senses the fault.

S905: N1 switches, at the ingress end, to receive the data frame stream through the P_RX path.

State 3: The node N1 completes SNCP switching, and selects P_RX for reception, to restore an E2E service.

S906: N1 performs, at the ingress end, a re-framing operation on the data frame stream, and before completing the re-framing operation at the ingress end, transparently transmits, at the egress end, the data frame stream to N2.

State 3.1: Window 3: First, N1 receives a data frame through N1.P_RX. In this period, framing of an N1.P_RX signal needs to be completed at N1.P_RX. For example, after N1.RX consecutively receives two data frames, an LOF state is updated to an OOF state, and then N1.RX continues to consecutively receive two data frames to complete the framing operation. In addition, during the framing operation performed at the ingress end of N1, each data frame in the data frame stream is transparently transmitted. When performing the framing operation at the ingress end, N1 suppresses frame header regeneration. That is, N1 does not continue to send the AIS maintenance frame or the invalid frame by using the original frame header, but instead, directly sends the data frame stream to N2 based on a position of an alignment identifier of the data frame stream received through P_RX. Before completing re-framing, N1 keeps transparently transmitting a frame header of the data frame stream received through P_RX. After completing re-framing, N1 continues to perform framing according to an alignment rule of a new frame header, and continues to send the data frame stream.

Optionally, as described above, when detecting the LOF alarm, N1 may update a pipe state to a dAIS state. N1 may suppress frame header regeneration based on the dAIS state. That is, N1 does not continue to send the AIS maintenance frame or the invalid frame by using the original frame header, but instead, directly sends the data frame stream to N2 based on the position of the alignment identifier of the data frame stream received through P_RX. For details, refer to the foregoing descriptions of the dAIS state. Details are not described herein again.

S907: N2 receives the data frame stream at the ingress end.

S908: N2 performs, at the ingress end, a re-framing operation on the data frame stream, and before completing the re-framing operation at the ingress end, transparently transmits, at the egress end, the data frame stream to N3.

In the window 3, first, N2 receives the data frame stream from N1, N2 cannot perform framing based on the original frame header, N2X enters a re-framing state, and N2 needs to complete framing of a data frame. In addition, during the framing operation performed at the ingress end of N2, each data frame in the data frame stream is transparently transmitted. When performing the framing operation at the ingress end, N2 suppresses frame header regeneration. That is, N2 does not continue to send the AIS maintenance frame or the invalid frame by using the original frame header, but instead, directly sends the data frame stream to N3 based on the position of the alignment identifier of the received data frame stream. Before completing re-framing, N2 keeps transparently transmitting a frame header of the received data frame stream. After completing re-framing, N2 continues to perform framing according to an alignment rule of a new frame header, and continues to send the data frame stream.

Optionally, as described above, when detecting the LOF alarm, N2 may update a pipe state to a dAIS state. N2 may suppress frame header regeneration based on the dAIS state. That is, N2 does not continue to send the AIS maintenance frame or the invalid frame by using the original frame header, but instead, directly sends the data frame stream to N3 based on the position of the alignment identifier of the received data frame stream. For details, refer to the foregoing descriptions of the dAIS state. Details are not described herein again.

State 3.2: Window 4: After completing the framing operation, N2 continues to perform framing according to the alignment rule of the new frame header, and continues to send the data frame stream.

S909: N3 receives the data frame stream at the ingress end.

S910: N3 performs, at the ingress end, a re-framing operation on the data frame stream, and before completing the re-framing operation at the ingress end, transparently transmits the data frame stream at the egress end.

In the window 4, first, N3 receives the data frame stream from N2, N3 cannot perform framing based on the original frame header, N3X enters a re-framing state, and N3 needs to complete framing of a data frame. In addition, during the framing operation performed at the ingress end of N3, each data frame in the data frame stream is transparently transmitted. When performing the framing operation at the ingress end, N3 suppresses frame header regeneration. That is, N3 does not continue to send the AIS maintenance frame or the invalid frame by using the original frame header, but instead, directly sends the data frame stream to N3 based on the position of the alignment identifier of the received data frame stream. Before completing re-framing, N3 keeps transparently transmitting a frame header of the received data frame stream. After completing re-framing, N3 continues to perform framing according to an alignment rule of a new frame header, and continues to send the data frame stream.

Optionally, as described above, when detecting the LOF alarm, N3 may update a pipe state to a dAIS state. N3 may suppress frame header regeneration based on the dAIS state. That is, N3 does not continue to send the AIS maintenance frame or the invalid frame by using the original frame header, but instead, directly sends the data frame stream to N3 based on the position of the alignment identifier of the received data frame stream. For details, refer to the foregoing descriptions of the dAIS state. Details are not described herein again.

In the window 4, after completing the framing operation, N3 continues to perform framing according to the alignment rule of the new frame header, and continues to send the data frame stream.

As described above, N1, N2, and N3 perform frame header regeneration during re-framing, and transparently transmit a new frame header received through N1.P_RX while performing re-framing. In this case, switching performance is irrelevant to hop count. That is, all nodes simultaneously enter the re-framing state, to ensure E2E fgOTN protection switching performance.

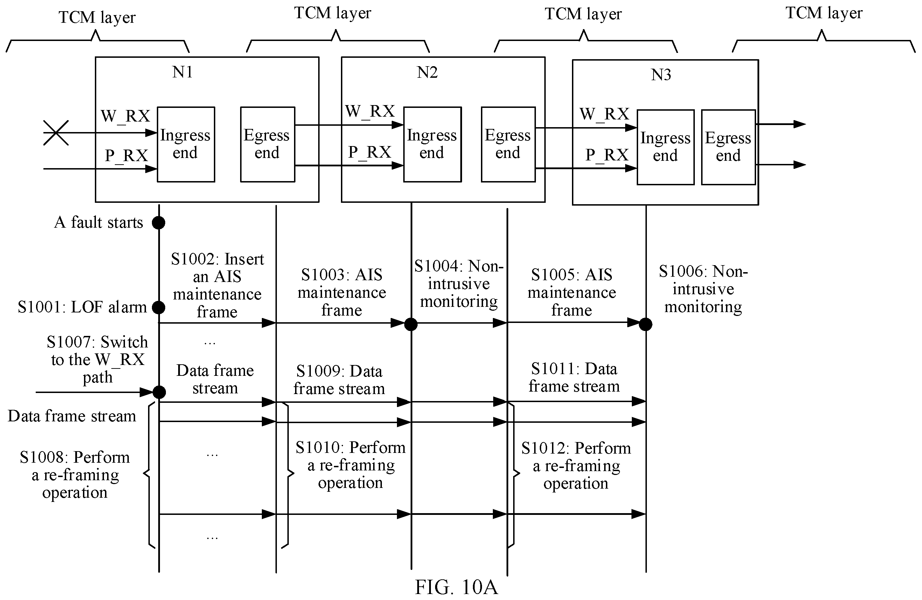

FIG. 10A is a schematic flowchart of a protection switching method for an optical transport network according to an embodiment of this application. In FIG. 10A, the cascaded segment protection scenario described in FIG. 5A is used as an example. That is, one fgOTN that passes through N1, N2, and N3 is used as an example. An SNCS group is configured on the nodes N1, N2, and N3. W_RX is a working path at a receiving end, P_RX is a protection path at the receiving end, and TX represents a transmitting end. The receiving end may also be referred to as an ingress end (in), and the transmitting end may also be referred to as an egress end (out).

S1001: N1 detects, at an ingress end, that an LOF alarm exists on W-RX.

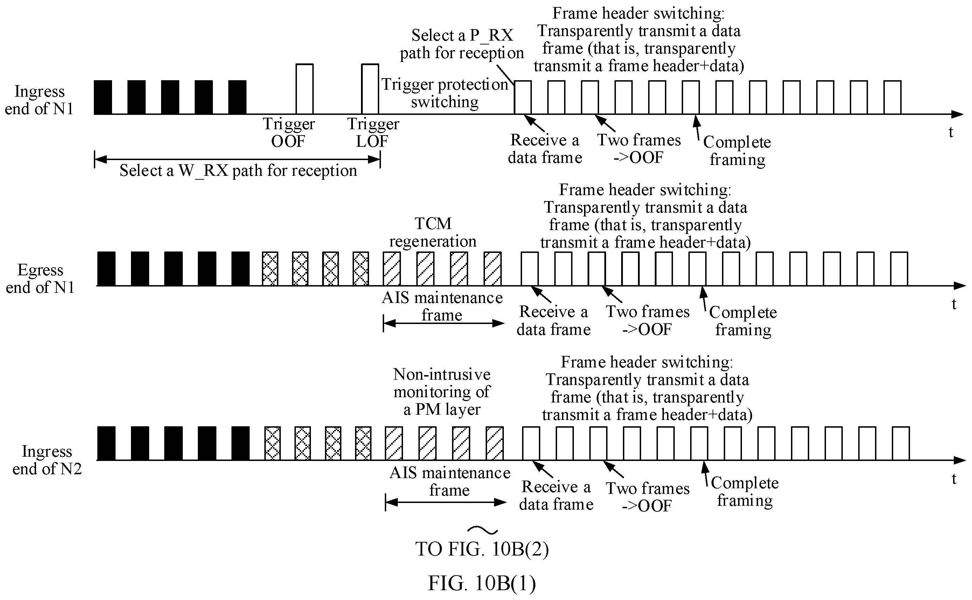

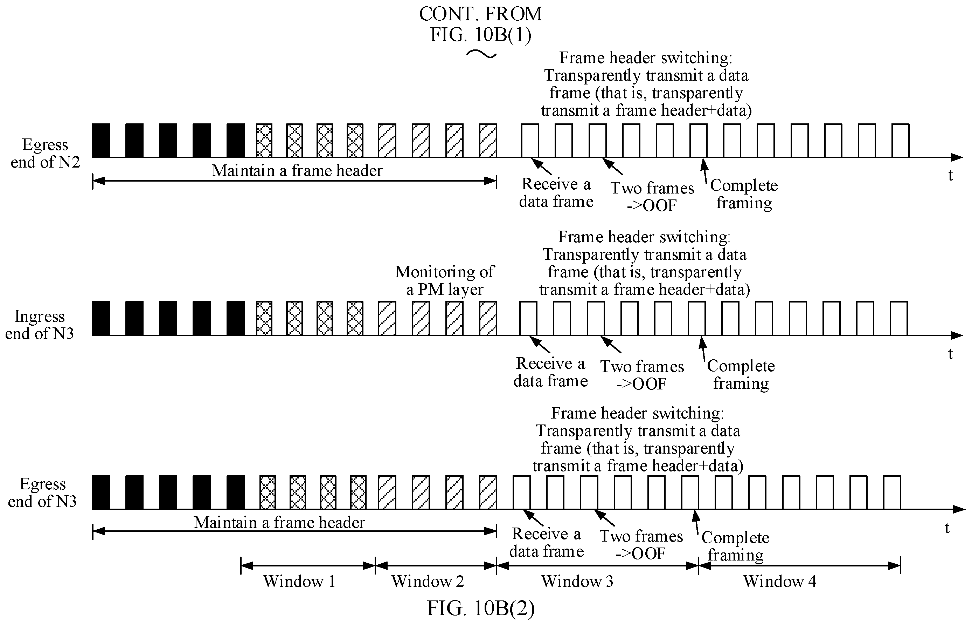

As shown in FIG. 10B(1) and FIG. 10B(2), in a state 1: Before a fault occurs, SNCS protection at N1 receives a data frame through the working path W_RX, and forwards the data frame to the node N2 and the node N3 through an egress end.

As shown in FIG. 10B(1) and FIG. 10B(2), service data indicated by black bars is transmitted along N1.W_RX->N1.TX->N2.W_RX->N2.TX->N3.W_RX->N3.TX.

State 2: The fault occurs on the SNCS working path of the node N1, and no signal is input through the W_RX path of N1. The fault finally triggers SNCS protection of N1 to perform protection switching. That is, N1 is updated to receive a signal through P_RX. However, in a time window before the node N1 performs protection switching, a fault occurs on W_RX, N1 senses the fault on W_RX, and then starts SNCS switching to complete SNCS switching and switch to receive a data frame through P_RX.

State 2.1: Window 1: in a period from occurrence of the fault on W_RX to sensing the fault on W_RX by N1, the egress end of N1 continues sending by using an original frame header. Because no signal is input, an N1.TX signal maintains a pre-fault frame header position, and a payload area is filled with invalid information. That is, the egress end of N1 sends an invalid data frame. In this case, the downstream nodes N2 and N3 do not sense any fault, as shown in FIG. 10B(1) and FIG. 10B(2).

S1002: N1 inserts an AIS maintenance frame at the egress end. The AIS maintenance frame is also sent based on the original frame header. That is, an insertion position of a framing identifier of the AIS maintenance frame may be determined according to a framing rule of a data frame stream received through the first transmission path. In other words, the insertion position of the framing identifier is determined based on a start sequence number of a frame period of the data frame stream before a fault occurs on the first transmission path. An overhead area of the AIS maintenance frame also includes a PM overhead and a TCM overhead. The PM overhead indicates that a fault occurs on N1. The TCM overhead indicates that the fault does not continue to a downstream direction of N1. In other words, N2 and N3 may no longer sense the fault based on the TCM overhead.

State 2.2: Window 2: In a period from detecting the fault on W_RX by N1 to completing SNCP switching by N1, N1 has detected the fault on W_RX and therefore inserts the AIS maintenance frame of the fgOTN path in the N1.TX direction. In a period of sending the AIS maintenance frame in N1.TX, the original frame header is maintained (the original position of the framing identifier is maintained). In an SNCS protection scenario, TCM overhead regeneration occurs. That is, the TCM overhead indicates that the fault does not continue to the downstream direction of N1. Therefore, the nodes N2 and N3 do not sense any fault.

S1003: N1 sends, at the egress end, the AIS maintenance frame to N2, so that N2 receives the AIS maintenance frame through an ingress end.

In the window 2, the node N2 receives the AIS maintenance frame and does not sense the fault based on the TCM overhead.

S1004: N2 performs non-intrusive monitoring on the PM overhead.

S1005: N2 sends, at an egress end, the AIS maintenance frame to N3, so that N3 receives the AIS maintenance frame through an ingress end.

In the window 2, the node N3 receives the AIS maintenance frame and does not sense the fault based on the TCM overhead.

S1006: N3 performs non-intrusive monitoring on the PM overhead.

S1007: N1 switches, at the ingress end, to receive the data frame stream through the P_RX path.

State 3: The node N1 completes SNCP switching, and selects P_RX for reception, to restore an E2E service.

S1008: N1 performs, at the ingress end, a re-framing operation on the data frame stream, and before completing the re-framing operation at the ingress end, transparently transmits, at the egress end, the data frame stream to N2.

State 3.1: Window 3: First, N1 receives a data frame through N1.P_RX. In this period, framing of an N1.P_RX signal needs to be completed at N1.P_RX. For example, after N1.RX consecutively receives two data frames, an LOF state is updated to an OOF state, and then N1.RX continues to consecutively receive two data frames to complete the framing operation. In addition, during the framing operation performed at the ingress end of N1, each data frame in the data frame stream is transparently transmitted. When performing the framing operation at the ingress end, N1 suppresses frame header regeneration. That is, N1 does not continue to send the AIS maintenance frame or the invalid frame by using the original frame header, but instead, directly sends the data frame stream to N2 based on a position of an alignment identifier of the data frame stream received through P_RX. Before completing re-framing, N1 keeps transparently transmitting a frame header of the data frame stream received through P_RX. After completing re-framing, N1 continues to perform framing according to an alignment rule of a new frame header, and continues to send the data frame stream.

Optionally, as described above, when detecting the LOF alarm, N1 may update a pipe state to a dAIS state. N1 may suppress frame header regeneration based on the dAIS state. That is, N1 does not continue to send the AIS maintenance frame or the invalid frame by using the original frame header, but instead, directly sends the data frame stream to N2 based on the position of the alignment identifier of the data frame stream received through P_RX. For details, refer to the foregoing descriptions of the dAIS state. Details are not described herein again.

S1009: N2 receives the data frame stream at the ingress end.

S1010: N2 performs, at the ingress end, a re-framing operation on the data frame stream, and when detecting that the PM overhead indicates that a fault exists in an upstream direction of N2, N2 transparently transmits, at the egress end, the data frame stream to N3 before completing the re-framing operation at the ingress end.

In the window 3, first, N2 receives the data frame stream from N1, N2 cannot perform framing based on the original frame header, N2X enters a re-framing state, and N2 needs to complete framing of a data frame. In addition, when detecting that the PM overhead indicates that a fault exists in the upstream direction of N2, N2 transparently transmits each data frame in the data frame stream during the framing operation performed at the ingress end of N2. When performing the framing operation at the ingress end, N2 suppresses frame header regeneration. That is, N2 does not continue to send the AIS maintenance frame or the invalid frame by using the original frame header, but instead, directly sends the data frame stream to N3 based on the position of the alignment identifier of the received data frame stream. Before completing re-framing, N2 keeps transparently transmitting a frame header of the received data frame stream. After completing re-framing, N2 continues to perform framing according to an alignment rule of a new frame header, and continues to send the data frame stream.

Optionally, as described above, when detecting the LOF alarm, N2 may update a pipe state to a dAIS state. N2 may suppress frame header regeneration based on the dAIS state. That is, N2 does not continue to send the AIS maintenance frame or the invalid frame by using the original frame header, but instead, directly sends the data frame stream to N3 based on the position of the alignment identifier of the received data frame stream. For details, refer to the foregoing descriptions of the dAIS state. Details are not described herein again.

State 3.2: Window 4: After completing the framing operation, N2 continues to perform framing according to the alignment rule of the new frame header, and continues to send the data frame stream.

S1011: N3 receives the data frame stream at the ingress end.

S1012: N3 performs, at the ingress end, a re-framing operation on the data frame stream, and when detecting that the PM overhead indicates that a fault exists in an upstream direction of N3, N3 transparently transmits, at the egress end, the data frame stream before completing the re-framing operation at the ingress end.

In the window 3, first, N3 receives the data frame stream from N1, N3 cannot perform framing based on the original frame header, N3X enters a re-framing state, and N3 needs to complete framing of a data frame. In addition, when detecting that the PM overhead indicates that a fault exists in the upstream direction of N3, N3 transparently transmits each data frame in the data frame stream during the framing operation performed at the ingress end of N3. When performing the framing operation at the ingress end, N3 suppresses frame header regeneration. That is, N3 does not continue to send the AIS maintenance frame or the invalid frame by using the original frame header, but instead, directly sends the data frame stream to N3 based on the position of the alignment identifier of the received data frame stream. Before completing re-framing, N3 keeps transparently transmitting a frame header of the received data frame stream. After completing re-framing, N3 continues to perform framing according to an alignment rule of a new frame header, and continues to send the data frame stream.

Optionally, as described above, when detecting the LOF alarm, N3 may update a pipe state to a dAIS state. N3 may suppress frame header regeneration based on the dAIS state. That is, N3 does not continue to send the AIS maintenance frame or the invalid frame by using the original frame header, but instead, directly sends the data frame stream to N3 based on the position of the alignment identifier of the received data frame stream. For details, refer to the foregoing descriptions of the dAIS state. Details are not described herein again.

In the window 4, after completing the framing operation, N3 continues to perform framing according to the alignment rule of the new frame header, and continues to send the data frame stream.

As described above, in an SNCS scenario, TCM overheads are regenerated segment by segment. Each node performs non-intrusive monitoring on a PM layer of the fgOTN. If a fault is detected in the upstream direction, frame header regeneration is suppressed. While an N1.P_RX new frame header is transparently transmitted, re-framing is performed. In this case, switching performance is irrelevant to hop count. That is, all nodes simultaneously enter the re-framing state, to ensure E2E fgOTN protection.

Based on the same inventive concept as the foregoing embodiments, an embodiment of this application further provides a protection switching apparatus for an optical transport network. The method, the apparatus, and the system are based on the same inventive concept. Principles of the method, the apparatus, and the system for resolving problems are similar. Therefore, for implementation of the apparatus and the method, mutual reference may be made, and details of repeated parts are not described.

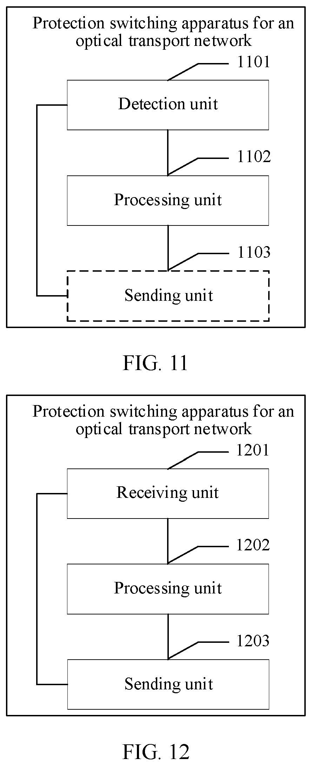

The apparatus may be used in a network device (for example, a first network device or N1). The apparatus may be specifically a processor, a chip, a chip system, a module that is in a processor and is configured to perform a function of the network device, or the like. The apparatus may be implemented by the line board in FIG. 2. FIG. 11 is a diagram of a structure of a possible protection switching apparatus for an optical transport network according to an embodiment of this application. As shown in FIG. 11, the apparatus includes a detection unit 1101 and a processing unit 1102. Optionally, the apparatus further includes a sending unit 1103.

In an example, the apparatus is used in a first network device, the detection unit 1101 is configured to perform S601, the processing unit 1102 is configured to perform S602 and S603, and the sending unit 1103 is configured to perform S604 to send a data frame stream. In another example, the detection unit 1101 is configured to perform S701, the processing unit 1102 is configured to perform S702, S704, and S705, and the sending unit 1103 is configured to perform S703 and S706.

Optionally, the foregoing three units may further perform other related optional steps performed by the first network device or N1 described in any one of the foregoing embodiments. Details are not described herein again.

The apparatus may be used in a network device (for example, a second network device, N2, or N3). The apparatus may be specifically a processor, a chip, a chip system, a module that is in a processor and is configured to perform a function of the network device, or the like. The apparatus may be implemented by the line board in FIG. 2. FIG. 12 is a diagram of a structure of a possible protection switching apparatus for an optical transport network according to an embodiment of this application. As shown in FIG. 12, the apparatus includes a receiving unit 1201 and a processing unit 1202. Optionally, the apparatus further includes a sending unit 1203. The receiving unit 1201 is configured to perform S801 and S803. The processing unit 1202 is configured to perform a re-framing operation in S804, and the sending unit 1203 is configured to perform a transparent transmission operation in S804.

Optionally, the foregoing three units may further perform other related optional steps performed by the second network device, N2, or N3 described in any one of the foregoing embodiments. Details are not described herein again.

In embodiments of this application, division into the units is an example, and is merely a logical function division. During actual implementation, another division manner may be used. In addition, functional units in embodiments of this application may be integrated into one processor, or each of the units may exist alone physically, or two or more units are integrated into one unit. The integrated unit may be implemented in a form of hardware, or may be implemented in a form of a software functional unit.

It may be understood that the apparatus provided in this embodiment of this application can implement all method steps implemented by a corresponding device in the foregoing method embodiments, and can achieve same technical effects. A part and beneficial effects that are the same as those in the method embodiments in this embodiment are not specifically described herein again.

Based on the same technical concept, an embodiment of this application further provides an apparatus. The apparatus may implement functions implemented by a network device in the foregoing embodiments. The apparatus may include a processor and an optical transceiver. The optical transceiver is configured to receive and send a data frame stream or an AIS maintenance frame. The processor is configured to perform a processing operation on the received or sent data frame stream or AIS maintenance frame.

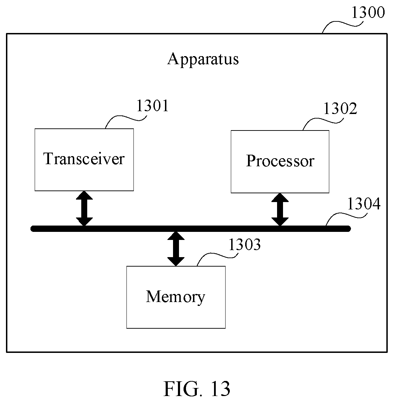

Based on the same technical concept, an embodiment of this application further provides an apparatus. The apparatus may implement functions implemented by a related device in the foregoing embodiments. As shown in FIG. 13, an apparatus 1300 may include a transceiver 1301, a memory 1303, and a processor 1302. The transceiver 1301, the memory 1303, and the processor 1302 may be connected through a bus 1304. The transceiver 1301 may be used by the apparatus to perform communication, for example, to send or receive a signal. The memory 1303 is coupled to the processor 1302, and may be configured to store a program and data that are necessary for implementing functions of the apparatus 1300. The memory 1303 and the processor 1302 may be integrated or may be independent of each other.

For example, the transceiver 1301 may be a communication port, for example, a communication port (also referred to as an interface) used for communication between network elements. The transceiver 1301 may also be referred to as a transceiver unit or a communication unit. The processor 1302 may be implemented by using a processing chip or a processing circuit. The transceiver 1301 may receive or send information in a wireless manner or in a wired manner.

In addition, based on an actual use requirement, the apparatus provided in this embodiment of this application may include a processor, and the processor invokes an external transceiver and/or memory to implement the foregoing functions, steps, or operations. The apparatus provided in this embodiment of this application may also include a memory, and the processor invokes and executes a program stored in the memory to implement the foregoing functions, steps, or operations. Alternatively, the apparatus provided in this embodiment of this application may include a processor and a transceiver (or a communication interface), and the processor invokes and executes a program stored in an external memory, to implement the foregoing functions, steps, or operations. Alternatively, the apparatus provided in this embodiment of this application may include a processor, a memory, and a transceiver.

Based on the same concept as that of the foregoing method embodiments, an embodiment of this application further provides a computer-readable storage medium. The computer-readable storage medium stores program instructions (also referred to as a computer program or instructions). When the program instructions are executed by a processor, a computer is enabled to perform the operation performed by the network device in the foregoing method embodiments and any possible implementation of the foregoing method embodiments.

Based on the same concept as that of the foregoing method embodiments, this application further provides a computer program product, including program instructions. When the computer program product is invoked and executed by a computer, the computer may be enabled to implement the operation performed by the network device in the foregoing method embodiments and any possible implementation of the foregoing method embodiments.

Based on the same concept as that of the foregoing method embodiments, this application further provides a chip or a chip system. The chip is coupled to a transceiver, and is configured to implement the operation performed by a network device in the foregoing method embodiments and any possible implementation of the foregoing method embodiments. The chip system may include the chip and components such as a memory and a communication interface.

Based on the same concept as that of the foregoing method embodiments, an embodiment of this application further provides a communication system. The communication system includes a plurality of network devices, for example, includes a first network device and a second network device. For another example, N1, N2, and N3 are included. The network device may perform the methods shown in FIG. 6, FIG. 7, and FIG. 8.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the protection scope of this application. This application is intended to cover these modifications and variations of this application provided that they fall within the scope of protection defined by the following claims and their equivalent technologies.

## Claims

1. A protection switching method for an optical transport network, comprising:
detecting, by a first network device at an ingress end, that a fault occurs on a first transmission path, wherein the ingress end is configured to connect the first network device and an upstream network device of the first network device;
switching, by the first network device at the ingress end, to receive a data frame stream from the upstream network device through a second transmission path; and
performing, by the first network device at the ingress end, a re-framing operation on the data frame stream; and before completing the re-framing operation at the ingress end, transparently transmitting, by the first network device at an egress end, the data frame stream to a downstream network device of the first network device, wherein the egress end is configured to connect the first network device and the downstream network device.

2. The method according to claim 1, wherein detecting, by the first network device at the ingress end, that the fault occurs on the first transmission path comprises:
detecting, by the first network device at the ingress end, that a loss of frame LOF alarm occurs on the first transmission path.

3. The method according to claim 2, wherein the first network device switches, at the ingress end, to receive the data frame stream from the upstream network device through the second transmission path, and the method further comprises:
when the first network device detects, at the ingress end, that the LOF alarm is generated on the first transmission path, inserting, at the egress end, an alarm indication signal AIS maintenance frame, wherein an overhead area of the AIS maintenance frame comprises a framing identifier, and an insertion position of the framing identifier is determined based on a frame header position of the data frame stream before the fault occurs on the first transmission path; and
sending, by the first network device at the egress end, the AIS maintenance frame to the downstream network device.

4. The method according to claim 3, wherein the method further comprises:
when the first network device detects, at the ingress end, that the LOF alarm is generated on the first transmission path, updating, to an alarm indication state, a state of a pipe to which the data frame stream belongs, wherein the alarm indication state indicates that a fault exists in an upstream direction of the first network device; and
transparently transmitting, at the egress end, the data frame stream to the downstream network device comprises:
before the alarm indication state is terminated, transparently transmitting, at the egress end, the data frame stream to the downstream network device, wherein
a duration of the alarm indication state is greater than or equal to a duration of performing the re-framing operation.

5. The method according to claim 3 or 4, wherein a subnetwork connection protection with sublayer monitoring SNCS group is configured between the first network device and the downstream network device of the first network device, the overhead area of the AIS maintenance frame further comprises a path monitoring PM overhead and a tandem connection monitoring TCM overhead, and the PM overhead indicates that a fault exists on the first network device; and
before sending, by the first network device at the egress end, the AIS maintenance frame to the downstream network device, the method further comprises:
modifying, by the first network device at the egress end, the TCM overhead of the AIS maintenance frame, wherein the modified TCM overhead of the AIS maintenance frame indicates that the fault does not continue to a downstream direction of the first network device, and indicates that the downstream network device is to perform non-intrusive monitoring on the PM overhead, and that the downstream network device is prohibited from performing SNCS switching when it is detected that the PM overhead indicates that a fault exists on the first network device.

6. The method according to any one of claims 1 to 5, wherein a data frame in the data frame stream is a fine grain optical transport network fgOTN frame.

7. A protection switching method for an optical transport network, comprising:
receiving, by a second network device at an ingress end, an AIS maintenance frame from an upstream network device of the second network device, and sending the AIS maintenance frame to a downstream network device through an egress end, wherein the ingress end is configured to connect the second network device and the upstream network device, and the egress end is configured to connect the second network device and the downstream network device;
after a specified duration elapses from reception of the AIS maintenance frame, receiving, by the second network device at the ingress end, a data frame stream from the upstream network device; and
performing, by the second network device at the ingress end, a re-framing operation on the data frame stream, and before completing the re-framing operation, transparently transmitting, at the egress end, the data frame stream to the downstream network device of the second network device.

8. The method according to claim 7, wherein the method further comprises:
when receiving the AIS maintenance frame, updating, by the second network device to an alarm indication state, a state of a pipe to which the data frame stream belongs, wherein the alarm indication state indicates that a fault exists in an upstream direction of the second network device; and
transparently transmitting, at the egress end, the data frame stream to the downstream network device comprises:
before the alarm indication state is terminated, transparently transmitting, at the egress end, the data frame stream to the downstream network device, wherein
a duration of the alarm indication state is greater than or equal to a duration of performing the re-framing operation.

9. The method according to claim 8, wherein no subnetwork connection protection SNCP group is configured between the second network device and the upstream network device of the second network device.

10. The method according to claim 7 or 8, wherein a subnetwork connection protection with sublayer monitoring SNCS group is configured between the second network device and the upstream network device of the second network device, an overhead area of the AIS maintenance frame further comprises a path monitoring PM overhead and a tandem connection monitoring TCM overhead, the PM overhead indicates that a fault exists in the upstream direction of the second network device, and the TCM overhead indicates that the fault does not continue to the second network device; and
after receiving, by the second network device, the AIS maintenance frame, before transparently transmitting, at the egress end, the data frame stream to the downstream network device, the method further comprises:
performing non-intrusive monitoring on the AIS maintenance frame, and determining that the PM overhead indicates that the fault exists in the upstream direction of the second network device.

11. The method according to any one of claims 7 to 10, wherein a data frame in the data frame stream is a fine grain optical transport network fgOTN frame.

12. A protection switching apparatus for an optical transport network, comprising a processor and a memory, wherein
the memory is configured to store program code; and
the processor is configured to read and execute the program code stored in the memory, to implement the method according to any one of claims 1 to 11.

13. A chip, wherein the chip is connected to a memory, and is configured to read and execute program code stored in the memory, to implement the method according to any one of claims 1 to 11.

14. A computer-readable storage medium, wherein the computer-readable storage medium stores a software program, and when the software program is read and executed by one or more processors, the method according to any one of claims 1 to 11 is implemented.

15. A computer program product comprising instructions, wherein when the computer program product runs on a computer, the computer is enabled to perform the method according to any one of claims 1 to 11.
